(19) Europäisches Patentamt / European Patent Office / Office européen des brevets

(11) **EP 4 604 546 A1**

(12) **EUROPEAN PATENT APPLICATION**
published in accordance with Art. 153(4) EPC

(43) Date of publication:
**20.08.2025 Bulletin 2025/34**

(21) Application number: **23880142.7**

(22) Date of filing: **16.10.2023**

(51) International Patent Classification (IPC):
**H04N 19/625** (2014.01)     **H04N 19/61** (2014.01)
**H04N 19/18** (2014.01)      **H04N 19/132** (2014.01)
**H04N 19/124** (2014.01)     **H04N 19/157** (2014.01)

(52) Cooperative Patent Classification (CPC):
**H04N 19/124; H04N 19/132; H04N 19/157;
H04N 19/18; H04N 19/61; H04N 19/625**

(86) International application number:
**PCT/KR2023/015941**

(87) International publication number:
**WO 2024/085565 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.10.2022 US 202263416594 P**

(71) Applicant: **LG Electronics Inc.**
**Yeongdeungpo-gu**
**Seoul 07336 (KR)**

(72) Inventors:
• **KOO, Moonmo**
  **Seoul 06772 (KR)**
• **LIM, Jaehyun**
  **Seoul 06772 (KR)**
• **CHOI, Jungah**
  **Seoul 06772 (KR)**
• **KIM, Seunghwan**
  **San Diego, California 92131 (US)**
• **ZHAO, Jie**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE, AND RECORDING MEDIUM ON WHICH BITSTREAM IS STORED**

(57) An image decoding method and device according to the present disclosure derive transform coefficients of the current block from a bitstream, perform inverse quantization and/or inverse transformation on the transform coefficients of the current block so as to derive residual samples of the current block, and can reconstruct the current block on the basis of the residual samples of the current block. Here, inverse transformation can be performed on the basis of a non-separable primary inverse transform kernel and/or a trigonometric function-based primary transform kernel.

FIG.4

Derive transform coefficient of current block — S400

Derive residual sample based on transform coefficient of current block — S410

Reconstruct current block based on residual sample of current block — S420

**Description**

[Technical Field]

The present disclosure relates to an image encoding/decoding method and device, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and a device for performing transform by using non-separable primary transform.

The present disclosure is to provide a method and a device for performing transform by using a non-separable primary transform kernel of a reduced dimension.

The present disclosure is to provide a method and a device for determining a non-separable primary transform kernel based on an encoding parameter.

The present disclosure is to provide a method and a device for applying non-separable primary transform in a relationship with another transform.

[Technical Solution]

An image decoding method and device according to the present disclosure may derive a transform coefficient of a current block from a bitstream, perform at least one of dequantization or inverse transform on the transform coefficient of the current block to derive a residual sample of the current block, and reconstruct the current block based on the residual sample of the current block.

In an image decoding method and device according to the present disclosure, a transform kernel for the inverse transform may be determined based on a plurality of predefined transform kernels.

In an image decoding method and device according to the present disclosure, the plurality of predefined transform kernels may include at least one of a non-separable primary inverse transform kernel or a trigonometric function-based primary transform kernel.

In an image decoding method and device according to the present disclosure, a transform kernel for the inverse transform may be determined as one of the non-separable primary inverse transform kernel and DST-7.

In an image decoding method and device according to the present disclosure, the non-separable primary inverse transform kernel is a kernel in which N transform coefficients are input and M transform coefficients are output, and N may be smaller than M.

In an image decoding method and device according to the present disclosure, the N may be variably determined based on a predefined encoding parameter.

In an image decoding method and device according to the present disclosure, the encoding parameter may include at least one of a block size, inter prediction information, intra prediction information or a quantization parameter.

In an image decoding method and device according to the present disclosure, the trigonometric function-based primary transform kernel may include at least one of DCT-2, DST-7, DCT-8, DCT-5, DST-4, or DST-1.

In an image decoding method and device according to the present disclosure, a transform set for a non-separable primary inverse transform may be determined based on an intra prediction mode of the current block, and the non-separable primary inverse transform kernel may be derived from the transform set.

In an image decoding method and device according to the present disclosure, the transform set may be determined based on an intra prediction mode of the current block and a pre-defined mapping table.

An image encoding method and device according to the present disclosure may derive a residual sample of a current block, perform at least one of transform or quantization on a residual sample of the current block to derive a transform coefficient of the current block, and encode a transform coefficient of the current block.

In an image encoding method and device according to the present disclosure, a transform kernel for the transform may be determined based on a plurality of predefined transform kernels, and the plurality of predefined transform kernels may include at least one of a non-separable primary transform kernel or a trigonometric function-based primary transform kernel.

A computer-readable digital storage medium storing encoded video/image information resulting in performing an image decoding method due to a decoding device according to the present disclosure is provided.

A computer-readable digital storage medium storing video/image information generated according to an image encoding method according to the present disclosure is provided.

A method and a device for transmitting video/image information generated according to an image encoding method according to the present disclosure are provided.

[Technical Effects]

The present disclosure may improve transform performance by using non-separable primary transform as primary transform.

The present disclosure may improve transform performance by performing transform by using a non-separable primary transform kernel of a reduced dimension.

The present disclosure may improve encoding efficiency by effectively determining or signaling a non-separable primary transform kernel based on an encoding parameter.

[Brief Description of the Drawings]

FIG. 1 shows a video/image coding system according to the present disclosure.

FIG. 2 shows a rough block diagram of an encoding device to which an embodiment of the present disclosure may be applied and encoding of a video/image signal is performed.

FIG. 3 shows a rough block diagram of a decoding device to which an embodiment of the present disclosure may be applied and decoding of a video/image signal is performed.

FIG. 4 shows an image decoding method performed by a decoding device 300, as an embodiment according to the present disclosure.

FIG. 5 illustratively shows an intra prediction mode according to the present disclosure and its prediction direction.

FIG. 6 is a flowchart illustrating a transform information signaling process according to an embodiment of the present disclosure.

FIG. 7 shows a schematic configuration of a decoding device 300 performing an image decoding method according to the present disclosure.

FIG. 8 shows an image encoding method performed by an encoding device 200, as an embodiment according to the present disclosure.

FIG. 9 shows a schematic configuration of an encoding device 200 that performs an image encoding method according to the present disclosure.

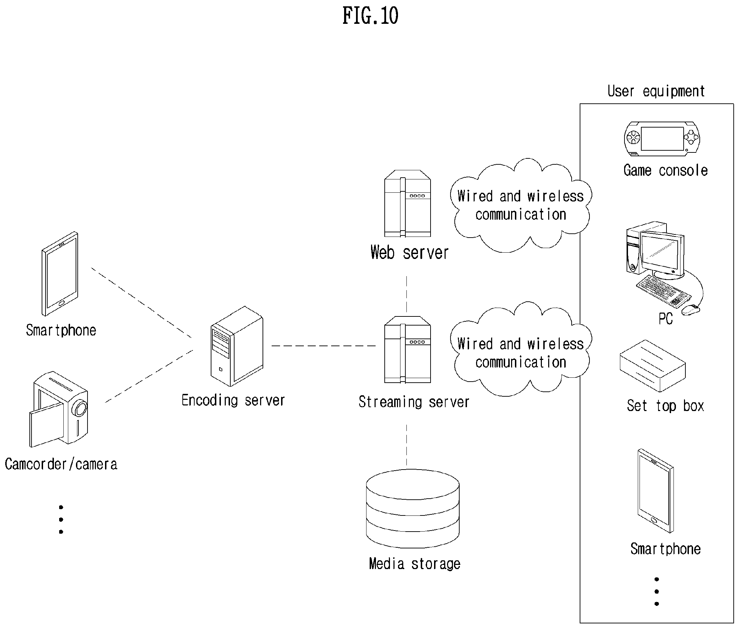

FIG. 10 shows an example of a contents streaming system to which embodiments of the present disclosure may be applied.

[Detailed Description]

Since the present disclosure may make various changes and have several embodiments, specific embodiments will be illustrated in a drawing and described in detail. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

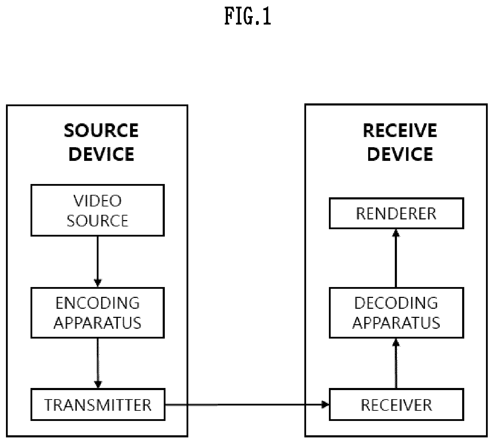

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/-image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

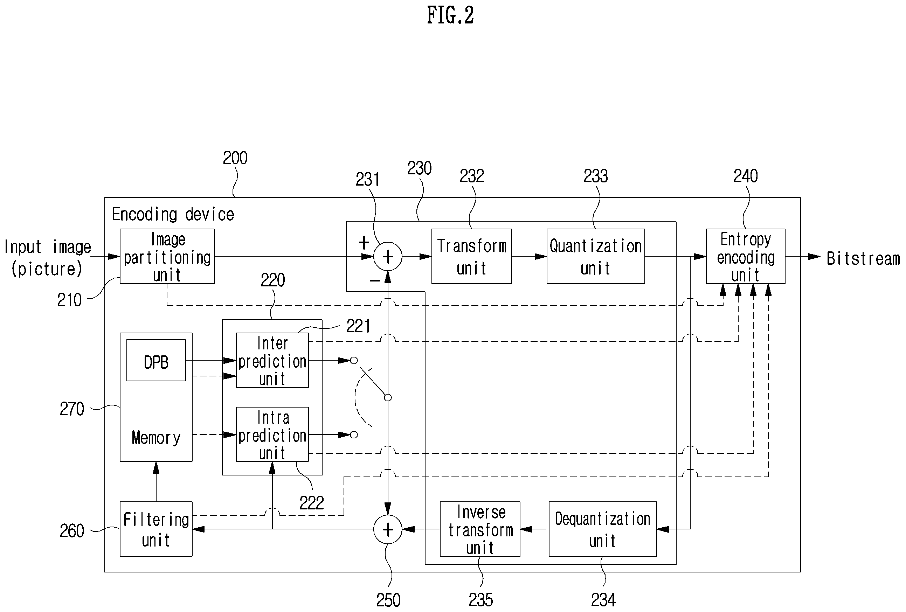

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

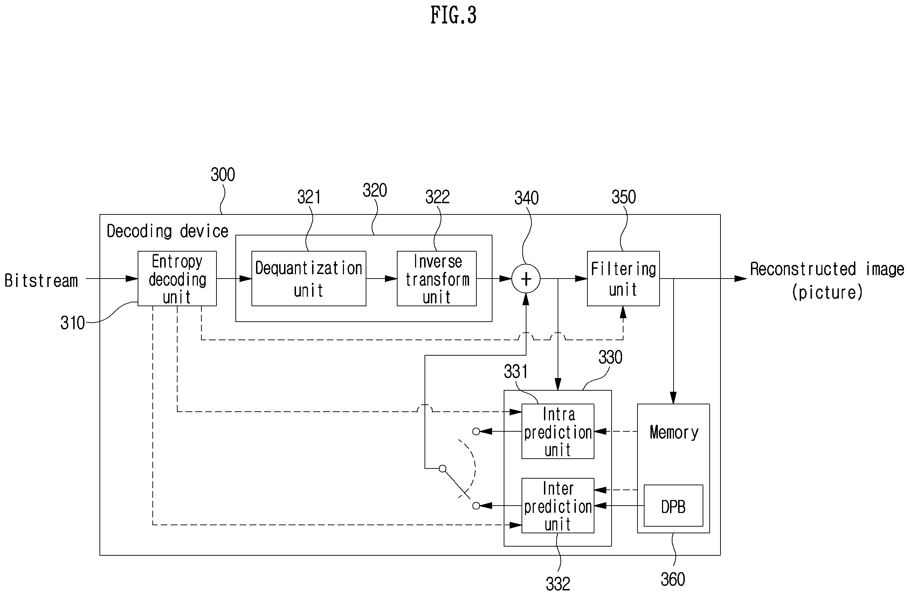

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

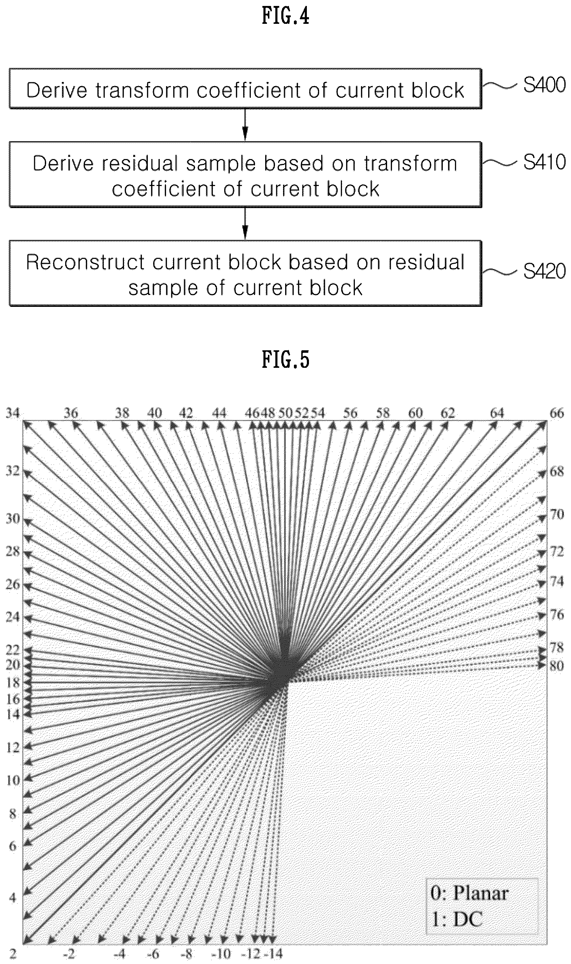

FIG. 4 shows an image decoding method performed by a decoding device, as an embodiment according to the present disclosure.

Referring to FIG. 4, the transform coefficient of a current block may be derived from a bitstream S400. In other words, a bitstream may include residual information of a current block and derive the transform coefficient of a current by decoding corresponding residual information.

Referring to FIG. 4, the transform coefficient of a current block may be derived from a bitstream S400. In other words, a bitstream may include residual information of a current block and derive the transform coefficient of a current by decoding corresponding residual information.

When adaptive multiple transform selection (MTS) is applied, inverse transform may be performed based on at least one of DCT-2, DST-7, or DCT-8. Here, DCT-2, DST-7, DCT-8, etc. may be called a transform type, a transform kernel or a transform core.

In the present disclosure, inverse transform may mean separable transform. However, it is not limited thereto, and inverse transform may mean non-separable transform or may be a concept including separable transform and non-separable transform. In addition, inverse transform in the present disclosure means primary transform, but is not limited thereto, and may be applied to secondary transform by being transformed into an identical/similar form.

For example, as a method for inverse transform, only DCT-2 and non-separable transform may be used, or non-separable transform may be additionally used for at least one of DCT-2, DST-7 or DCT-8, or non-separable transform may replace at least one transform kernel of DCT-2, DST-7 or DCT-8.

As a more concrete example, when there are (DCT-2, DCT-2), (DST-7, DST-7), (DCT-8, DST-7), (DST-7, DCT-8), (DCT-8, DCT-8) as a transform kernel candidate for separable transform, non-separable transform may be replaced with or added to at least one of the five transform kernel candidates. Here, a notation such as (transform 1, transform 2) indicates that transform 1 is applied in a horizontal direction and transform 2 is applied in a vertical direction. When non-separable transform replaces some of the corresponding transform kernel candidates, the remaining transform kernel candidates except for (DCT-2, DCT-2) and (DST-7, DST-7) may be replaced with non-separable transform. However, the transform kernel candidate is just an example, and other types of DCT and/or DST may be included, and transform skip may be included as a transform kernel candidate.

Non-separable transform may refer to transform or inverse transform based on a non-separable transform matrix. In other words, unlike separable transform that performs horizontal transform and vertical transform independently by separating vertical transform and horizontal transform, non-separable transform may perform horizontal transform and vertical transform at once.

For example, when non-separable transform is performed on a 4x4 block, input data X to non-separable transform is the same as in Equation 1 below.

[Equation 1]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

When the input data X is represented in a vector form, vector X' may be represented as follows.

[Equation 2]

$$X' = [X_{00}, X_{01}, X_{02}, X_{03}, X_{10}, X_{11}, X_{12}, X_{13}, X_{20}, X_{21}, X_{22}, X_{23}, X_{30}, X_{31}, X_{32}, X_{33}]^T$$

In this case, the non-separable transform may be performed as in Equation 3 below.

[Equation 3]

$$F = T \cdot X'$$

In Equation 3, F represents a transform coefficient vector, T represents a 16x16 non-separable transform matrix, and • represents the multiplication of a matrix and a vector.

Through the Equation 3, 16x1 transform coefficient vector F may be derived, and the F may be reconfigured into a 4x4 block according to predetermined scan order. The scan order may be a horizontal scan, a vertical scan, a diagonal scan, a z scan, a raster scan or a pre-defined scan.

A non-separable transform set and/or transform kernel for the non-separable transform may be variously configured based on at least one of a prediction mode (e.g., an intra mode, an inter mode, etc.), the width, height or the number of pixels of a current block, the position of a sub-block within a current block, an explicitly signaled syntax element, a statistical characteristic of neighboring samples, whether to use secondary transform or a quantization parameter (QP).

Specifically, for an intra mode, pre-defined intra prediction modes may be grouped to correspond to n non-separable transform sets and each non-separable transform set may include k transform kernel candidates. Here, n and k may be an arbitrary constant according to a rule (a condition) defined in the same way for an encoding device and a decoding device.

The number of non-separable transform sets and/or the number of transform kernel candidates included in a non-separable transform set may be configured differently according to the width and/or height of a current block. For example, for a 4x4 block, $n_1$ non-separable transform sets and $k_1$ transform kernel candidates may be configured. For a 4x8 block, $n_2$ non-separable transform sets and $k_2$ transform kernel candidates may be configured. In addition, the number of non-separable transform sets and the number of transform kernel candidates included in each non-separable transform set may be configured differently according to the product of the width and height of a current block. For example, when the product of the width and height of a current block is greater than or equal to (or exceeds) 256, $n_3$ non-separable transform sets and $k_3$ transform kernel candidates may be configured, and otherwise, $n_4$ non-separable transform sets and $k_4$ transform kernel candidates may be configured. In other words, since a variation in the statistical characteristic of a residual signal is different depending on a block size, the number of non-separable transform sets and transform kernel candidates may be configured differently to reflect this.

When a current block is partitioned into a plurality of sub-blocks, the statistical characteristic of a residual signal may be different for each corresponding sub-block, so the number of non-separable transform sets and transform kernel candidates may be configured differently. For example, when a 4x8 or 8x4 block is partitioned into two 4x4 sub-blocks and non-separable transform is applied to each sub-block, $n_5$ non-separable transform sets and $k_5$ transform kernel candidates may be configured for a top-left 4x4 sub-block, and $n_6$ non-separable transform sets and $k_6$ transform kernel candidates may be configured for the other 4x4 sub-block.

Based on an explicitly signaled syntax element, the number of non-separable transform sets and transform kernel candidates may be configured differently. As the syntax element, information indicating any one of a plurality of non-separable transform configurations may be used. For example, when three types of non-separable transform configurations are supported (i.e., $n_7$ non-separable transform sets and $k_7$ transform kernel candidates, $n_8$ non-separable transform sets and $k_8$ transform kernel candidates, $n_9$ non-separable transform sets and $k_9$ transform kernel candidates), a corresponding syntax element may have a value of 0, 1, 2, and a non-separable transform configuration applied to a current block may be determined based on the value of a signaled syntax element.

According to whether secondary transform is applied and/or which secondary transform is applied, the number of non-separable transform sets and transform kernel candidates may be configured differently. For example, when secondary transform is not applied, a non-separable transform configuration including $n_{10}$ non-separable transform sets and $k_{10}$ transform kernel candidates may be applied. When secondary transform is applied, a non-separable transform configuration including $n_{11}$ non-separable transform sets and $k_{11}$ transform kernel candidates may be applied.

According to the range of a quantization parameter (QP) and/or a QP value, a different non-separable transform configuration may be applied. For example, when a QP value has a small value, a non-separable transform configuration including $n_{12}$ non-separable transform sets and $k_{12}$ transform kernel candidates may be applied. On the other hand, when a QP value has a large value, a non-separable transform configuration including $n_{13}$ non-separable transform sets and $k_{13}$ transform kernel candidates may be applied. When a QP value is less than or equal to (or below) a threshold value (e.g., 32), it may be classified as a case in which a QP value has a small value, and otherwise, it may be classified as a case in which a QP value has a large value. Alternatively, the range of a QP value may be divided into at least three parts, and a different non-separable transform configuration may be applied to each range.

For a relatively large block, instead of using non-separable transform corresponding to the width and height of a corresponding block, a corresponding block may be partitioned into a plurality of sub-blocks and non-separable transform corresponding to the width and height of a sub-block may be used. For example, when performing non-separable transform on a 4x8 block, a 4x8 block may be partitioned into two 4x4 sub-blocks and 4x4 block-based non-separable transform may be used for each 4x4 sub-block. Alternatively, for a 8x16 block, a block may be partitioned into two 8x8 sub-blocks and 8x8 block-based non-separable transform may be used.

The non-separable transform set may be determined based on the intra prediction mode of a current block and a mapping table. A mapping table may define a mapping relationship between pre-defined intra prediction modes and non-separable transform sets. Pre-defined intra prediction modes may include 2 non-directional modes and 65 directional modes. Generally, non-separable transform has a larger transform kernel than separable transform. This means that computational complexity required for a transform process is high and memory required for storing a transform kernel is large. Meanwhile, separable transform may consider only a statistical characteristic existing in a horizontal and/or vertical direction, but non-separable transform may simultaneously consider a statistical characteristic on a two-dimensional space including horizontal and vertical directions, providing better compression efficiency. Since the statistical characteristic and diversity of a residual are different depending on the directionality of an intra prediction mode, non-separable transform may be absolutely necessary and there may be an intra prediction mode where the characteristic of a residual may be sufficiently identified only with separable transform. Accordingly, by predefining which transform will be used according to an intra prediction mode in an encoding device and a decoding device, a transform process may be designed by optimizing complexity and a memory demand. The non-directional mode may include a planar mode with a number of 0 and a DC mode with a number of 1, and the directional mode may include intra prediction modes no.2 to no.66. However, it is an example, and the present disclosure may be applied even when the number of pre-defined intra prediction modes is different.

Due to the application of wide angle intra prediction (WAIP), a pre-defined intra prediction mode may further include intra prediction modes no.-14 to no.-1 and intra prediction modes no.67 to no.80.

FIG. 5 illustratively shows an intra prediction mode according to the present disclosure and its prediction direction. Referring to FIG. 5, modes no.-14 to no.-1 and modes no.2 to no.33 and modes no.35 to no.80 are symmetrical in terms of a prediction direction based on mode no.34. For example, modes no.10 and no.58 are symmetrical based on a direction corresponding to mode no.34 and mode no.-1 is symmetrical to mode no.67. Accordingly, for a vertical directional mode symmetrical to a horizontal directional mode based on mode no.34, input data may be transposed and used. Transposing input data means that a row in the input data MxN of a two-dimensional block becomes a column and a column becomes a row to configure NxM data.

For example, when a 4x4 block is used, 16 data forming a 4x4 block may be appropriately arranged to configure a 16x1 one-dimensional vector for non-separable transform. In this case, a one-dimensional vector may be configured in the row-first order or in the column-first order. Residual samples, a result of non-separable transform, may be arranged in the order to configure a two-dimensional block.

For modes no.-14 to no.-1 and modes no.2 to no.33, when data arrangement order for configuring a 16x1 input vector is the row-first order, an input vector may be configured in the column-first order for modes no.35 to no.80.

Although mode no.34 may be considered neither a horizontal directional mode nor a vertical directional mode, it is classified as belonging to a horizontal directional mode in the present disclosure. In other words, an input data arrangement method for a horizontal directional mode, i.e., the row-first order, may be used for modes no.-14 to no.-1 and modes no.2 to no.33, and input data may be transposed and used for a vertical directional mode symmetrical based on mode no.34.

For a non-square block, symmetry in a square block (i.e., symmetry between mode no.P and mode no.(68-P) (2<=P<=33) or symmetry between mode no.Q and mode no. (66-Q) (-14<=Q<=-1) in a NxN block) may not be utilized. Accordingly, in addition to symmetry based only on an intra prediction mode, symmetry between block shapes in a transposition relationship, i.e., symmetry between a KxL block and a LxK block, may be utilized together. Specifically, there is a symmetry relationship between a KxL block predicted by mode no.P and a LxK block predicted by mode no.(68-P). Alternatively, there is a symmetry relationship between a KxL block predicted by mode no.Q and a LxK block predicted by mode no. (66-Q).

Since a KxL block with mode no.2 and a LxK block with mode no.66 may be considered symmetrical to each other, the same transform kernel may be applied to a KxL block and a LxK block. If a non-separable transform set for the intra prediction mode of a KxL block is mapped, in order to apply non-separable transform to a LxK block, a non-separable transform set may be derived through a mapping table corresponding to the KxL block based on mode no. (68-P) instead of mode no.P applied to a LxK block. Alternatively, a non-separable transform set may be derived through a mapping table corresponding to the KxL block based on mode no. (66-Q) instead of mode no.Q applied to a LxK block.

For example, in order to apply non-separable transform to a LxK block, a non-separable transform set may be selected based on mode no.2 instead of mode no.66. In addition, for a KxL block, input data may be read in pre-determined order (e.g., row-first order or column-first order) to configure a one-dimensional vector and apply corresponding non-separable transform. For a LxK block, input data may be read in transposed order to configure a one-dimensional vector and apply corresponding non-separable transform. In other words, if a KxL block is read in row-first order, a LxK block may be read in column-first order. Conversely, if a KxL block is read in column-first order, a LxK block may be read in row-first order.

In addition, when mode no.34 is applied to a KxL block, a non-separable transform set may be determined based on mode no.34, and input data may be read in pre-determined order to configure a one-dimensional vector and perform corresponding non-separable transform. When mode no.34 is applied to a LxK block, a non-separable transform set may be determined based on mode no.34, but input data may be read in transposed order to configure a one-dimensional vector and perform corresponding non-separable transform.

In the present disclosure, a method for determining a non-separable transform set based on a KxL block and a method for configuring input data are described, but corresponding non-separable transform may be performed by equally utilizing symmetry described above for a KxL block based on a LxK block. Alternatively, there may be a limit that a block whose width is greater than a height is used as a reference block. Alternatively, there may be a limit that a non-square block does not utilize symmetry. In this case, a non-square block may use a different number of non-separable transform sets and/or transform kernel candidates than a square block and may select a non-separable transform set by using a different mapping table than a square block.

An example of a mapping table for selecting a non-separable transform set is as follows.

[Table 1]

| predModeIntra | TrSetIdx |
|---|---|
| predModeIntra < 0 | 4 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |
| 67 <= predModeIntra <= 80 | 4 |

Table 1 shows an example in which a non-separable transform set is allocated by intra prediction mode when there are five non-separable transform sets. The value of predModeIntra refers to the value of an intra prediction mode considering WAIP, and TrSetIdx is an index representing a specific non-separable transform set. In Table 1, it may be seen that the same non-separable transform set is applied to modes positioned in a direction symmetrical to each other according to an intra prediction mode. Table 1 is just an example of using five non-separable transform sets, and does not limit the total number of non-separable transform sets for non-separable transform.

Alternatively, as in Table 2, non-separable transform may not be applied to WAIP for compression performance.

[Table 2]

| predModeIntra | TrSetIdx |
|---|---|
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |

Alternatively, as in Table 3, a separate non-separable transform set may not be configured for WAIP, and a non-separable transform set corresponding to an adjacent intra prediction mode may be shared.

[Table 3]

| predModeIntra | TrSetIdx |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 80 | 1 |

The non-separable transform set may include a plurality of transform kernel candidates, and any one of a plurality of transform kernel candidates may be selectively used. For this purpose, an index signaled through a bitstream may be used. Alternatively, based on the context information of a current block, any one of a plurality of transform kernel candidates may be implicitly determined. Here, context information may refer to the size of a current block or whether non-separable transform is applied to a neighboring block. Here, the size of a current block may be defined as a width, a height, the maximum/minimum value of a width and a height, the sum of a width and a height or the product of a width and a height. Hereinafter, a method for determining a transform kernel for inverse transform of a current block will be described in detail.

Embodiment 1

As described above, inverse transform may be divided into separable transform and non-separable transform. Separable transform may refer to performing transform for each of a horizontal direction and a vertical direction for a two-dimensional block, and non-separable transform may refer to performing transform once for samples configuring all or part of a two-dimensional block. When separable transform is denoted, it may be denoted as a pair of horizontal transform and vertical transform, and in the present disclosure, it is indicated as (horizontal transform, vertical transform).

A plurality of transform sets may be defined for the inverse transform of a current block. Each transform set may include one or more transform kernel candidates.

For example, any one of (DST-7, DST-7), (DCT-8, DST-7), (DST-7, DCT-8) or (DCT-8, DCT-8) may be applied as separable transform, and four corresponding transform kernel candidates may be considered as one transform set. In addition, (DCT-2, DCT-2) may be considered as one transform set. A transform skip that does not apply transform may also be considered as one transform set, and (DCT-2, DCT-2) and a transform skip may be considered as one transform set. In the present disclosure, a transform kernel may refer to one transform (e.g., DCT-2, DST-7) or may refer to two transform pairs (e.g., (DCT-2, DCT-2)).

As an example of another transform set, there may be a non-separable transform set described above. In the present disclosure, non-separable transform applied as primary transform may be indicated non-separable primary transform (NSPT). In NSPT, a plurality of non-separable transform sets may be configured, and each non-separable transform set may include one or more transform kernels as a transform kernel candidate. For NSPT, any one of a plurality of non-separable transform sets may be selected according to an intra prediction mode, and a plurality of non-separable transform sets for NSPT may be denoted as a NSPT set list. It is the same as discussed above, and a detailed description is omitted here.

A group of one or more transform sets available to a current block may be configured from a plurality of pre-defined transform sets. The group of one or more transform sets may be configured in a predetermined region unit to which a current block belongs, and is referred to as a collection hereinafter. Here, a predetermined region unit may be at least one of a picture, a slice, a coding tree unit row (CTU row) or a coding tree unit (CTU).

For example, a transform set configured with (DCT-2, DCT-2) is referred to as $S_1$, and a transform set configured with (DST-7, DST-7), (DCT-8, DST-7), (DST-7, DCT-8) and (DCT-8, DCT-8) is referred to as $S_2$, respectively. In addition, the above-described NSPT set list may include N non-separable transform sets, and N non-separable transform sets are called $S_{3,1}$, $S_{3,2}$, ..., $S_{3,N}$, respectively. Here, N may be 35, but is not limited thereto.

When $S_{3,13}$ is selected as a non-separable transform set for NSPT according to the intra prediction mode of a current block, a transform kernel that may be applied to a current block may belong to any one of $S_1$, $S_2$, or $S_{3,13}$. In this case, a collection available to a current block may be denoted as $\{S_1, S_2, S_{3,13}\}$.

As described above, since a collection according to the present disclosure is a group of one or more transform sets available to a current block, the collection may be differently configured depending on the context of a current block. Here, a context may include at least one of a shape, a size or an intra prediction mode. When a total of K contexts are defined, K collections may be generated, and each collection may be denoted as $C_i$ (i=1, 2, ..., N)., N). For example, when the size of a block to which NSPT may be applied is 4x4, 8x8, 16x16 or 32x32 and any one of a total of 35 non-separable transform sets is selected by an intra prediction mode, a total of 4 x 35 = 140 contexts may be defined when a different transform kernel is applied to each block size.

One collection may be configured based on the context of a current block and in this case, a process of selecting any one of a plurality of transform sets belonging to a corresponding collection and selecting any one of a plurality of transform kernel candidates belonging to a selected transform set may be performed. Here, the selection of a transform set and a transform kernel candidate may be performed implicitly based on the context of a current block or may be performed based on an index that is explicitly signaled. Alternatively, a process of selecting any one of a plurality of transform sets belonging to a collection and a process of selecting any one of a plurality of transform kernel candidates belonging to a selected transform set may be performed, respectively. For example, an index for selecting a transform set may be signaled first, and based on this, any one of a plurality of transform sets belonging to a collection may be selected. And then, an index indicating any one of a plurality of transform kernel candidates belonging to a transform set may be signaled, and any one transform kernel candidate may be selected from a transform set based on a signaled index. The transform kernel of a current block may be determined based on a selected transform kernel candidate. Alternatively, the selection of any one transform set from a collection may be implicitly performed based on the context of a current block, and the selection of any one transform kernel candidate from a selected transform set may be performed based on a signaled index. Alternatively, the selection of any one transform set from a collection may be performed based on a signaled index, and the selection of any one transform kernel candidate from a selected transform set may be implicitly performed based on the context of a current block. Alternatively, the selection of any one transform set from a collection may be implicitly performed based on the context of a current block, and the selection of any one transform kernel candidate from a selected transform set may also be implicitly performed based on the context of a current block. Of course, when 1 transform set belongs to a collection, an index for selecting a transform set may not be signaled. Similarly, when 1 transform kernel candidate belongs to a selected transform set, an index for indicating a corresponding transform kernel candidate may not be signaled. Alternatively, an index indicating any one of all transform kernel candidates belonging to a current collection may be signaled. In this case, a process of selecting any one transform set from a collection may be omitted. In this case, all transform sets belonging to a collection may be rearranged by considering a priority. For example, like a truncated unary code, when a small-length binary code is allocated to a small-value index, it may be advantageous to allocate a small-value index to a transform kernel candidate that is more advantageous for improving coding performance. When rearranging (shuffling) all transform kernel candidates belonging to a collection according to a priority, different shuffling may be applied for each collection. In addition, instead of rearranging all transform kernel candidates belonging to a collection, only some of them may be selectively rearranged.

Embodiment 2

A transform kernel for the inverse transform of a current block may be determined based on multiple transform selection (MTS).

MTS according to the present disclosure may use at least one of DST-7, DCT-8, DCT-5, DST-4, DST-1 or identity transform(IDT) as a transform kernel. In addition, MTS according to the present disclosure may further include a transform kernel of DCT-2.

In the present disclosure, a plurality of MTS sets for MTS may be defined. Based on the size and/or intra prediction mode of a current block, any one of a plurality of MTS sets may be determined. For example, in determining any one MTS set, 16 transform block sizes may be considered, and for a directional mode, the shape of a transform block and symmetry between intra prediction modes may be considered. For a mode of wide angle intra prediction (WAIP) (i.e., no.-1 to no.-14 (or no.-15), no.67 to no.80 (or no.81)), a MTS set corresponding to mode no.2 may be applied to modes no.-1 to no.-14 (or no.-15), and a MTS set corresponding to mode no.66 may be applied to modes no.67 to no.80 (or no.81). A separate MTS set may be allocated for a matrix-based intra prediction (MIP) mode.

For example, a MTS set according to a transform block size and an intra prediction mode may be allocated/defined as in Table 4 below.

[Table 4]

| Block Size | | Intra Prediction Mode | | | | |
|---|---|---|---|---|---|---|
| Width | Height | [0, 1] | [2, 12] | [13, 23] | [24, 34] | MIP |
| 4 | 4 | 0 | 1 | 2 | 3 | 4 |
| 4 | 8 | 5 | 6 | 7 | 8 | 9 |
| 4 | 16 | 10 | 11 | 12 | 13 | 14 |
| 4 | 32 | 15 | 16 | 17 | 18 | 19 |
| 8 | 4 | 20 | 21 | 22 | 23 | 24 |
| 8 | 8 | 25 | 26 | 27 | 28 | 29 |
| 8 | 16 | 30 | 31 | 32 | 33 | 34 |
| 8 | 32 | 35 | 36 | 37 | 38 | 39 |
| 16 | 4 | 40 | 41 | 42 | 43 | 44 |
| 16 | 8 | 45 | 46 | 47 | 48 | 49 |
| 16 | 16 | 50 | 51 | 52 | 53 | 54 |
| 16 | 32 | 55 | 56 | 57 | 58 | 59 |
| 32 | 4 | 60 | 61 | 62 | 63 | 64 |
| 32 | 8 | 65 | 66 | 67 | 68 | 69 |
| 32 | 16 | 70 | 71 | 72 | 73 | 74 |
| 32 | 32 | 75 | 76 | 77 | 78 | 79 |

Table 4 shows the allocation of a MTS set according to 16 transform block sizes and intra prediction modes. The number of pre-defined MTS sets is 80, and an index indicating any one of the 80 MTS sets may have a value from 0 to 79 as in Table 4.

[Table 5]

| MTS Set Index | Transform Kernel Candidate Index | | | | | |
|---|---|---|---|---|---|---|
| | 0 | 1 | 2 | 3 | 4 | 5 |
| 0 | 18 | 24 | 17 | 23 | 8 | 12 |
| 1 | 18 | 3 | 7 | 22 | 0 | 16 |
| 2 | 18 | 2 | 17 | 22 | 3 | 23 |
| 3 | 18 | 3 | 15 | 17 | 12 | 23 |
| 4 | 18 | 12 | 3 | 19 | 10 | 13 |
| 5 | 18 | 12 | 19 | 23 | 13 | 24 |
| 6 | 18 | 12 | 17 | 2 | 3 | 23 |
| 7 | 18 | 2 | 17 | 22 | 12 | 23 |

(continued)

| MTS Set Index | Transform Kernel Candidate Index | | | | | |
|---|---|---|---|---|---|---|
| | 0 | 1 | 2 | 3 | 4 | 5 |
| 8 | 18 | 2 | 11 | 17 | 22 | 23 |
| 9 | 18 | 12 | 19 | 23 | 3 | 10 |
| 10 | 16 | 12 | 13 | 24 | 7 | 8 |
| 11 | 16 | 2 | 11 | 23 | 12 | 18 |
| 12 | 13 | 17 | 2 | 22 | 12 | 18 |
| 13 | 17 | 11 | 2 | 21 | 12 | 18 |
| 14 | 16 | 13 | 19 | 22 | 3 | 10 |
| 15 | 18 | 12 | 13 | 7 | 14 | 22 |
| 16 | 16 | 12 | 11 | 1 | 18 | 22 |
| 17 | 17 | 13 | 3 | 22 | 12 | 18 |
| 18 | 6 | 12 | 1 | 22 | 13 | 17 |
| 19 | 16 | 12 | 13 | 15 | 2 | 23 |
| 20 | 18 | 24 | 23 | 19 | 12 | 17 |
| 21 | 18 | 24 | 2 | 17 | 0 | 23 |
| 22 | 17 | 3 | 4 | 22 | 2 | 13 |
| 23 | 18 | 12 | 19 | 23 | 3 | 15 |
| 24 | 18 | 12 | 19 | 23 | 3 | 10 |
| 25 | 6 | 12 | 18 | 24 | 13 | 19 |
| 26 | 6 | 12 | 2 | 21 | 13 | 18 |
| 27 | 17 | 11 | 1 | 22 | 2 | 18 |
| 28 | 16 | 17 | 3 | 11 | 12 | 23 |
| 29 | 8 | 12 | 19 | 23 | 11 | 24 |
| 30 | 16 | 13 | 7 | 23 | 12 | 19 |
| 31 | 6 | 12 | 1 | 11 | 18 | 22 |
| 32 | 17 | 11 | 1 | 21 | 12 | 18 |
| 33 | 6 | 11 | 17 | 21 | 12 | 18 |
| 34 | 8 | 11 | 14 | 17 | 12 | 22 |
| 35 | 6 | 12 | 11 | 21 | 14 | 16 |
| 36 | 6 | 12 | 11 | 1 | 17 | 21 |
| 37 | 6 | 12 | 11 | 2 | 17 | 21 |
| 38 | 6 | 11 | 21 | 1 | 12 | 17 |
| 39 | 16 | 12 | 11 | 7 | 1 | 5 |
| 40 | 8 | 12 | 19 | 24 | 11 | 17 |
| 41 | 18 | 13 | 1 | 22 | 2 | 24 |
| 42 | 6 | 2 | 17 | 21 | 19 | 22 |
| 43 | 16 | 12 | 11 | 19 | 8 | 15 |
| 44 | 8 | 12 | 17 | 24 | 13 | 15 |
| 45 | 6 | 12 | 19 | 21 | 17 | 18 |

(continued)

| MTS Set Index | Transform Kernel Candidate Index | | | | | |
|---|---|---|---|---|---|---|
| | 0 | 1 | 2 | 3 | 4 | 5 |
| 46 | 6 | 12 | 13 | 21 | 2 | 18 |
| 47 | 16 | 2 | 17 | 21 | 1 | 11 |
| 48 | 6 | 17 | 19 | 23 | 12 | 16 |
| 49 | 6 | 12 | 14 | 17 | 8 | 22 |
| 50 | 6 | 7 | 11 | 21 | 9 | 12 |
| 51 | 16 | 12 | 11 | 1 | 7 | 21 |
| 52 | 6 | 12 | 11 | 1 | 17 | 21 |
| 53 | 6 | 12 | 11 | 21 | 1 | 16 |
| 54 | 8 | 7 | 9 | 11 | 12 | 21 |
| 55 | 6 | 12 | 7 | 11 | 14 | 21 |
| 56 | 6 | 12 | 7 | 11 | 1 | 21 |
| 57 | 16 | 12 | 11 | 1 | 2 | 21 |
| 58 | 6 | 11 | 17 | 21 | 1 | 12 |
| 59 | 6 | 12 | 7 | 11 | 9 | 21 |
| 60 | 18 | 12 | 14 | 21 | 6 | 21 |
| 61 | 16 | 11 | 1 | 22 | 2 | 17 |
| 62 | 16 | 11 | 1 | 22 | 2 | 17 |
| 63 | 16 | 13 | 15 | 7 | 14 | 19 |
| 64 | 8 | 12 | 1 | 19 | 16 | 23 |
| 65 | 6 | 12 | 7 | 9 | 13 | 21 |
| 66 | 6 | 12 | 13 | 2 | 7 | 18 |
| 67 | 16 | 12 | 1 | 21 | 11 | 17 |
| 68 | 16 | 11 | 7 | 19 | 12 | 15 |
| 69 | 8 | 12 | 7 | 11 | 14 | 21 |
| 70 | 6 | 12 | 7 | 11 | 8 | 9 |
| 71 | 6 | 12 | 7 | 11 | 2 | 21 |
| 72 | 6 | 12 | 1 | 11 | 21 | 22 |
| 73 | 6 | 7 | 11 | 16 | 9 | 12 |
| 74 | 6 | 12 | 7 | 11 | 9 | 21 |
| 75 | 6 | 12 | 7 | 11 | 13 | 17 |
| 76 | 6 | 12 | 11 | 21 | 2 | 7 |
| 77 | 6 | 12 | 1 | 11 | 2 | 7 |
| 78 | 6 | 12 | 7 | 11 | 16 | 21 |
| 79 | 6 | 12 | 7 | 11 | 9 | 16 |

Table 5 shows a transform kernel candidate included in each MTS set described in Table 4. Each MTS set may be composed of six transform kernel candidates. A transform kernel candidate index has a value from 0 to 5, and may indicate any one of the six transform kernel candidates. Here, each transform kernel candidate may be a combination of a horizontal transform kernel and a vertical transform kernel for separable transform, and 25 transform kernel candidates with an index from 0 to 24 may be defined.

[Table 6]

| Kernel Combination Index | When the value of intra prediction mode is below 35 | When the value of intra prediction mode is greater than or equal to 35 |
|---|---|---|
| 0 | (DCT-8, DCT-8) | (DCT-8, DCT-8) |
| 1 | (DST-7, DCT-8) | (DCT-8, DST-7) |
| 2 | (DCT-5, DCT-8) | (DCT-8, DCT-5) |
| 3 | (DST-4, DCT-8) | (DCT-8, DST-4) |
| 4 | (DST-1, DCT-8) | (DCT-8, DST-1) |
| 5 | (DCT-8, DST-7) | (DST-7, DCT-8) |
| 6 | (DST-7, DST-7) | (DST-7, DST-7) |
| 7 | (DCT-5, DST-7) | (DST-7, DCT-5) |
| 8 | (DST-4, DST-7) | (DST-7, DST-4) |
| 9 | (DST-1, DST-7) | (DST-7, DST-1) |
| 10 | (DCT-8, DCT-5) | (DCT-5, DCT-8) |
| 11 | (DST-7, DCT-5) | (DCT-5, DST-7) |
| 12 | (DCT-5, DCT-5) | (DCT-5, DCT-5) |
| 13 | (DST-4, DCT-5) | (DCT-5, DST-4) |
| 14 | (DST-1, DCT-5) | (DCT-5, DST-1) |
| 15 | (DCT-8, DST-4) | (DST-4, DCT-8) |
| 16 | (DST-7, DST-4) | (DST-4, DST-7) |
| 17 | (DCT-5, DST-4) | (DST-4, DCT-5) |
| 18 | (DST-4, DST-4) | (DST-4, DST-4) |
| 19 | (DST-1, DST-4) | (DST-4, DST-1) |
| 20 | (DCT-8, DST-1) | (DST-1, DCT-8) |
| 21 | (DST-7, DST-1) | (DST-1, DST-7) |
| 22 | (DCT-5, DST-1) | (DST-1, DCT-5) |
| 23 | (DST-4, DST-1) | (DST-1, DST-4) |
| 24 | (DST-1, DST-1) | (DST-1, DST-1) |

Table 6 is an example of 25 transform kernel candidates described in Table 5. Specifically, horizontal transform and vertical transform of a transform kernel candidate are indicated as (horizontal transform, vertical transform). For each transform kernel candidate index, horizontal/vertical transform when an intra prediction mode is below 35 may be opposite to horizontal/vertical transform when an intra prediction mode is greater than or equal to 35. When the value of an intra prediction mode is greater than or equal to 35, a mode symmetrical based on mode no.34 may be derived, and a MTS set may be selected from Table 4 above based on a corresponding mode. In addition, symmetry in a block shape may be additionally considered. When an original transform block has a size of WxH, an original transform block may be considered to have a size of HxW by making it symmetrical, and a MTS set may be selected from Table 4. Here, the value of an intra prediction mode may be the value of a modified intra prediction mode. In other words, as a mode value for WAIP, no.-14 (or no.-15) to no.-1 may be modified to mode no.2, no.67 to no.80 (or no.81) may be modified to mode no.66, and the remaining modes may be set as the value of an intra prediction mode obtained by modifying the value of an original intra prediction mode as it is. In this case, since extended modes for WAIP are also configured symmetrically based on mode no.34, symmetry based on mode no.34 may be used for all directional modes except for a Planar mode and a DC mode. For example, when a 16x32 block is predicted by mode no.54, mode no.14 (=68-54) may be derived as a mode symmetrical to mode no.54 and a block size may be considered as 32x16. In this case, as defined in Table 4, a MTS set with an index of 72 may be selected.

When a MIP mode is applied, a MTS set allocated to a MIP mode may be selected based on the size of a current block without considering the symmetry of a block shape. Alternatively, when a MIP mode is applied, a MTS set allocated to a MIP mode may be selected based on a symmetric block size by considering the symmetry of a block shape. For example, when a MIP mode is applied to a 8x16 block, a 8x16 block may be considered as a 16x8 block symmetric thereto, and as defined in Table 4, a MTS set with an index of 49 may be selected. Alternatively, when a MIP mode is applied, an intra prediction mode may be considered as a planar mode. In this case, a MTS set allocated to a MIP mode may be selected based on the size of a current block without considering the symmetry of a block shape. Alternatively, a MTS set allocated to a MIP mode may be selected based on a symmetric block size by considering the symmetry of a block shape.

For a MIP mode, a flag representing whether a MIP mode is applied in a transpose mode may be used. When a MIP mode is applied to a current block of MxN and the flag indicates that a transpose mode is applied, an intra prediction mode may be considered as a planar mode and a current block of MxN may be considered as a NxM block. In other words, from Table 4, a MTS set corresponding to a block size of NxM and a planar mode may be selected. As described in Table 6, when the value of an intra prediction mode is greater than or equal to 35, horizontal transform and vertical transform are swapped, but since the intra prediction mode of a current block is considered as a planar mode, the horizontal transform and vertical transform of a transform kernel candidate may not be swapped. Alternatively, when a MIP mode is applied to a current block of MxN and the flag indicates that a transpose mode is applied, an intra prediction mode may not be considered as a planar mode and a current block of MxN may be considered as a NxM block. In other words, from Table 4, a MTS set corresponding to a block size of NxM and a MIP mode may be selected.

In Table 5, a transform kernel candidate selected by a transform kernel candidate index may be configured as the transform kernel of a current block. Alternatively, according to the size of a current block, at least one of the horizontal transform or the vertical transform of the selected transform kernel candidate may be changed to another transform kernel. For example, when a transform kernel candidate index is 3 and both the width and height of a current block are less than or equal to 16, at least one of the horizontal transform or the vertical transform of a transform kernel candidate corresponding to a transform kernel candidate index of 3 may be changed to another transform kernel. In this case, horizontal transform and vertical transform may be changed independently of each other. When a difference (or the absolute value of a difference) between the value of the intra prediction mode of a current block and the value of a horizontal mode is less than or equal to a predetermined threshold value, the vertical transform of the selected transform kernel candidate may be changed to IDT (identity transform). When a difference (or the absolute value of a difference) between the value of the intra prediction mode of a current block and the value of a horizontal mode is less than or equal to a predetermined threshold value, the horizontal transform of the selected transform kernel candidate may be changed to IDT (identity transform). Here, a threshold value may be determined based on the width and height of a current block, as in Table 7 below.

[Table 7]

| Block Size | | Threshold Value |
|---|---|---|
| Width | Height | |
| 4 | 4 | 8 |
| 4 | 8 | 6 |
| 4 | 16 | 4 |
| 8 | 4 | 8 |
| 8 | 8 | 8 |
| 8 | 16 | 6 |
| 16 | 4 | 4 |
| 16 | 8 | 2 |
| 16 | 16 | -1 |

Table 7 is for changing the horizontal transform and/or vertical transform of a transform kernel candidate selected by a transform kernel candidate index to another transform kernel, and defines a threshold value according to the size of a transform block.

Table 7 is for changing the horizontal transform and/or vertical transform of a transform kernel candidate selected by a transform kernel candidate index to another transform kernel, and defines a threshold value according to the size of a transform block.

Six transform kernel candidates configuring one MTS set may be divided into transform kernel candidate indexes 0 to 5 as defined in Table 5. A corresponding transform kernel candidate index may be signaled through a bitstream. A flag representing whether a MTS set is available/applied (a MTS enabled flag or a MTS flag) may be signaled, and when the flag indicates that a MTS set is available/applied, a transform kernel candidate index may be signaled. The MTS flag may be composed of 1 bin, and at least one context for CABAC-based entropy coding (hereinafter, referred to as a CABAC context) may be allocated to a corresponding bin. For example, a different CABAC context may be allocated for a case in which it is not a non-MIP mode and a case in which it is a MIP mode, respectively.

According to the context of a current block described above, the number of transform kernel candidates available to a current block may be configured differently. For example, as the context of a current block, the sum of absolute values of all or part of the transform coefficients in a current block may be considered. The sum of absolute values of a corresponding transform coefficient is referred to as AbsSum. When AbsSum is less than or equal to T1, only one transform kernel candidate corresponding to a transform kernel candidate index of 0 may be available. When AbsSum is greater than T1 and less than or equal to T2, four transform kernel candidates corresponding to a transform kernel candidate index of 0 to 3 may be available. When AbsSum is greater than T2, six transform kernel candidates corresponding to a transform kernel candidate index of 0 to 5 may be available. Here, T1 may be 6 and T2 may be 32, but this is only an example.

Since the number of transform kernel candidates available to a current block is 1 when AbsSum is less than or equal to T1, a transform kernel candidate corresponding to a transform kernel candidate index of 0 may be configured as the transform kernel of a current block without signaling a transform kernel candidate index. Since four transform kernel candidates are available when AbsSum is greater than T1 and less than or equal to T2, any one of the four transform kernel candidates may be selected based on a transform kernel candidate index with two bins. In other words, a transform kernel candidate index of 0 to 3 may be signaled as 00, 01, 10 and 11, respectively. For two bins above, a most significant bit (MSB) may be signaled first, and a least significant bit (LSB) may be signaled later. A different CABAC context may be allocated to each bin. For example, for two bins, a CABAC context other than a CABAC context allocated for the MTS flag may be allocated to each bin. Alternatively, a CABAC context may not be allocated to two bins and bypass coding may be applied. Since a transform kernel candidate index has a value from 0 to 5 when AbsSum is greater than T2, a transform kernel candidate index may not be expressed with only two bins. In this case, like truncated binary coding, a transform kernel candidate index may be expressed by allocating at least two bins. For each bin allocated by the truncated binary coding method, a CABAC context may be allocated, or bypass coding may be applied without allocating a CABAC context. Alternatively, a CABAC context may be allocated to some of a plurality of bins (e.g., a first bin, or first and second bins), and bypass coding may be applied to the remaining bins.

Embodiment 3

The transform kernel of a current block may be determined based on a transform set including one or more transform kernel candidates. The transform kernel of a current block may be derived as any one of one or more transform kernel candidates belonging to the transform set.

A process of determining the transform kernel of a current block may include at least one of 1) a process of determining the transform set of a current block or 2) a process of selecting any one transform kernel candidate from the transform set of a current block. The process of determining a transform set may be a process of selecting any one of a plurality of transform sets that are pre-defined identically for an encoding device and a decoding device. Alternatively, the process of determining a transform set may be a process of configuring one or more transform sets available to a current block among a plurality of transform sets that are pre-defined identically for an encoding device and a decoding device and selecting any one of the configured transform sets. Alternatively, the process of determining a transform set may be a process of configuring one transform set based on a transform kernel candidate available to a current block among a plurality of transform kernel candidates that are pre-defined identically for an encoding device and a decoding device.

When the transform set of a current block includes a plurality of transform kernel candidates, a process of selecting any one of a plurality of transform kernel candidates for a current block may be performed. However, when the transform set of a current block includes one transform kernel candidate (i.e., when there is one transform kernel candidate available to a current block), the transform kernel of a current block may be configured as a corresponding transform kernel candidate.

A transform set according to the present disclosure may refer to a (non-separable) transform set in the above-described embodiment 1 or may refer to a MTS set in embodiment 2. Alternatively, the transform set may be defined separately from a (non-separable) transform set in embodiment 1 or a MTS set in embodiment 2. In this case, the transform set may include one or more specific transform kernels as a transform kernel candidate. One specific transform kernel may be defined as a pair of a transform kernel for horizontal transform and a transform kernel for vertical transform or may be defined as one transform kernel that is equally applied to horizontal transform and vertical transform.

In the embodiment of the present disclosure, a process of applying NSPT which is non-separable transform applied as primary transform (or primary inverse transform) is described in detail. NSPT may be applied to all or part of a transform block. Based on forward NSPT, a residual sample existing in a region where NSPT is applied may be input as a one-dimensional vector of NSPT. In other words, residual samples existing in all or part of one transform block (referred to as a Region Of Interest (ROI) in the present disclosure) may be collected as a one-dimensional vector and configured as an input. Afterwards, when forward NSPT is applied, a primary transform coefficient may be obtained. Conversely, when backward NSPT is applied to a primary transform coefficient, a one-dimensional vector output may be obtained. Each element value configuring a corresponding output vector may be arranged at a determined position inside a 2D transform block to obtain a residual sample for a ROI.

For a non-separable transform kernel for NSPT, a matrix dimension may be determined according to the size of a ROI. In the present disclosure, a transform kernel may be referred to as a transform type or a transform matrix, and a non-separable transform kernel for NSPT may be referred to as a NSPT kernel. For example, when a current block is a MxN transform block, a ROI is a region of the entire MxN transform block and square NSPT is applied, the dimension of a corresponding transform matrix may be MN x MN. For example, when a ROI is a region of the entire 8x8 transform block, the dimension of a NSPT kernel may be 64 x 64.

According to an embodiment of the present disclosure, when NSPT is applied to a residual generated by intra prediction, a NSPT kernel may be adaptively determined according to an intra prediction mode. Since a statistical characteristic for a residual block may be different for each intra prediction mode, compression efficiency may be improved by adaptively determining a NSPT kernel according to an intra prediction mode.

It may be configured to share a NSPT kernel applied to at least one intra prediction mode. As described above, a non-separable transform set may be determined based on the intra prediction mode of a current block and a mapping table. A mapping table may define a mapping relationship between pre-defined intra prediction modes and non-separable transform sets. Predefined intra prediction modes may include two non-directional modes and 65 directional modes.

As an embodiment, intra prediction modes may be grouped into an intra prediction mode group. One NSPT kernel may be allocated or a plurality of NSPT kernels may be allocated to an intra prediction mode group. In other words, a non-separable transform set (a NSPT set) including at least one NSPT kernel may be allocated to an intra prediction mode group. A non-separable transform set may be mapped to an intra prediction mode and one of N NSPT kernels included in a non-separable transform set may be selected.

As an example, an intra prediction group may include adjacent prediction modes (e.g., modes no.17, no.18 and no.19). In addition, an intra prediction group may include modes having symmetry. For example, directional modes may be symmetrical based on a diagonal mode in FIG. 5 described above (i.e., intra prediction mode no.34). In this case, two symmetrical modes may configure one group (or pair). For example, mode no.18 and mode no.50 may be included in the same group because they are symmetrical based on mode no.34. However, a process of applying a forward NSPT kernel, transposing a 2D input block and configuring a one-dimensional input vector may be added to modes having symmetry. For example, when an intra prediction mode is less than or equal to 34, a one-dimensional input vector may be derived from a corresponding input block in row-first order without transposing a 2D input block. If an intra prediction mode is greater than 34, a one-dimensional input vector may be configured by transposing a 2D input block first and reading a corresponding input block in row-first order or by leaving a 2D input block as it is and reading a corresponding input block in column-first order.

Table 8 below illustrates a mapping table for allocating a NSPT set according to an intra prediction mode. Referring to Table 8, a total of 35 NSPT sets from 0 to 34 may be defined. A NSPT set allocated to the most adjacent general directional mode may be allocated to an extended WAIP mode (i.e., modes no.-14 to no.-1 and modes no.67 to no.80 in FIG. 5). In other words, NSPT set no.2 may be allocated to an extended WAIP mode.

[Table 8]

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| NSPT set index | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| NSPT set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| NSPT set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

A NSPT set may include at least one NSPT kernel (or kernel candidate). In other words, a NSPT set may include N NSPT kernel candidates. As an example, N may be configured as a value equal to or greater than 1 such as 1, 2, 3, 4, etc. A kernel applied to a current block among at least one NSPT kernel included in a NSPT set may be signaled by using an index. In the present disclosure, a corresponding index may be referred to as a NSPT index. As an example, a NSPT index may have a value of 0, 1, 2, ..., N - 1.

In addition, as an embodiment, when the number of NSPT kernel candidates is 1, a NSPT index value may be fixed to 0. In this case, a NSPT index may be inferred without being signaled separately. In addition, a flag indicating whether to apply NSPT may be signaled separately from a NSPT index. In the present disclosure, a corresponding flag may be referred to as a NSPT flag.

When a NSPT flag value is 1, NSPT may be applied. When a NSPT flag value is 0, NSPT may not be applied.

When a NSPT flag is not signaled, a NSPT flag value may be inferred as 0. As an example, when a NSPT flag value is 1, a NSPT index may be signaled. One of the N kernel candidates included in a NSPT set selected by an intra prediction mode may be specified based on a signaled NSPT index.

In an embodiment, the entropy coding method of a NSPT index may be defined in various ways by considering the number (N) of NSPT kernels included in a NSPT set. For example, as a method for mapping a value from 0 to N-1 to a bin string (i.e., a binarization method), a truncated unary binarization, truncated binarization or fixed-length binarization method may be used.

For example, when the value of N, the number of kernel candidates configuring a NSPT set, is 2, one of the two candidates may be specified as one bin. For example, 0 may indicate a first candidate and 1 may indicate a second candidate. In addition, when the value of N is 3 and truncated unary binarization is applied, a candidate may be specified as two bins. For example, first, second and third candidates may be binarized to 0, 10 and 11 and signaled, respectively. As an embodiment, binarized bins may be coded by using context coding or bypass coding.

In the present disclosure, a reduced primary transform (RPT) method using a transform kernel of a dimension reduced by primary transform is described. As described above, when forward NSPT is applied, samples belonging to a 2D residual block may be arranged (or rearranged) into a 1D vector in row-first order (or column-first order). Afterwards, a transform matrix for NSPT may be multiplied by an arranged vector. When a corresponding 2D residual block is a M x N block (M is a width and N is a height), the length of a rearranged 1D vector may be M*N. In other words, a corresponding 2D residual block may also be represented as a column vector having a dimension of M*N x 1. In the present disclosure, M*N may be expressed as MN for convenience. In this case, the dimension of a corresponding transform matrix may be MN x MN. In summary, forward NSPT may operate in a manner of obtaining a MN x 1 transform coefficient vector by multiplying the left of a MN x 1 vector by a corresponding MN x MN transform matrix.

When RPT is applied, instead of multiplying a MN x MN matrix as a forward NSPT transform matrix described above, r transform coefficients may be obtained by multiplying a r x MN matrix. Here, r represents the number of rows of a transform matrix, and MN represents the number of columns of a transform matrix. According to an embodiment of the present disclosure, the value of r may be configured to be less than or equal to MN. In other words, the existing forward NSPT transform matrix includes MN rows, and as a 1 x MN row vector, each row is the transform basis vector of a corresponding NSPT transform matrix. A corresponding transform coefficient may be obtained by multiplying each transform basis vector by a MN x 1 sample column vector.

Since the existing forward NSPT transform matrix is composed of MN row vectors, MN transform coefficients (i.e., a MN x 1 transform coefficient column vector) may be obtained by applying forward NSPT. Meanwhile, for forward RPT, a transform matrix may be composed of r transform basis vectors instead of MN transform basis vectors. Accordingly, when forward RPT is applied, r transform coefficients instead of MN transform coefficients (i.e., a r x 1 transform coefficient column vector) may be obtained.

A RPT kernel may be configured by selecting r transform basis vectors which are some of the transform basis vectors configuring a MN x MN forward NSPT kernel. In the present disclosure, a transform kernel may be referred to as a transform type or a transform matrix, and a non-separable transform kernel for NSPT may be referred to as a RPT kernel. In other words, when selecting r 1 x MN row vectors from a MN x MN forward NSPT kernel, it may be advantageous to select transform basis vectors that are most important from the perspective of coding performance. Specifically, in terms of energy compaction through transform, more energy may be concentrated on transform coefficients that appear first by multiplying a forward NSPT transform matrix. In other words, a transform basis vector positioned on the top of a forward NSPT transform matrix may generate a transform coefficient with greater energy. Considering this, a r x MN forward RPT kernel may be configured (or derived) by taking r from the top of a forward NSPT kernel.

RPT according to the present disclosure takes only some (i.e., r) of the transform coefficients obtained by applying the existing NSPT, and thus, some of the energy of an original signal may be lost. In other words, distortion may occur between an original signal and an original signal through a corresponding process. Nevertheless, only r transform coefficients instead of MN are generated by applying RPT, so the amount of bits required to code corresponding transform coefficients may be reduced. For this reason, for a signal where a lot of energy is concentrated in a small number of transform coefficients (e.g., an image residual signal), gains obtained by reducing signaling bits may be significantly large, improving coding performance.

Backward NSPT is a transform matrix, and may be the transpose matrix of a forward NSPT kernel described above. In this case, input data may be a transform coefficient signal instead of a sample signal such as a residual signal. Specifically, when a forward NSPT transform matrix is G and a sample signal rearranged into a 1D vector is x, a transform coefficient vector obtained by multiplying a corresponding transform matrix by the left may be expressed as in Equation 4 below.

[Equation 4]

$$y = Gx$$

Referring to Equation 4, x and y may be a MN x 1 column vector. G may have the form of a MN x MN matrix. A backward NSPT process may be expressed as in Equation 5 below by using the same variable.

[Equation 5]

$$x = G^{T}y$$

In Equation 5, $G^{T}$ refers to a transpose matrix of G. A forward RPT operation and a backward RPT operation according to the present disclosure may also be expressed by two equations above. However, when RPT is applied, y is a r x 1 column vector instead of a MN x 1 column vector, and G is a r x MN matrix instead of a MM x MN matrix. In other words, even when RPT instead of NSPT is applied, the dimension of a sample signal (e.g., an image residual signal) is not changed, which may mean that an original number of sample signals (i.e., MN sample signals) may be reconstructed only with r transform coefficients through backward RPT. In other words, original MN sample signals may be reconstructed by coding only r transform coefficients less than MN, which may improve coding performance.

In an embodiment of the present disclosure, a RPT structure is proposed that defines the value of r by considering the statistical characteristic of a residual block and derives a residual block of the existing transform block size from a residual block of a reduced size determined according to the defined value of r. If another additional transform (i.e., secondary transform) is applied to predict the statistical distribution of primary transform coefficients, a quantization process is applied to a primary transform coefficient, so quantized non-zero coefficients may be concentrated in a relatively low frequency domain. Accordingly, reduced secondary transform for the statistical distribution of primary transform coefficients may define the statistical characteristic of a primary transform coefficient relatively simply in the form of configuring the value of r for a given low frequency domain. However, RPT according to the present disclosure is a technology for defining the value of r by considering the statistical characteristic of samples in a residual block having a characteristic very different from the distribution of primary transform coefficients, and thus has a fundamental difference from reduced secondary transform. Hereinafter, various embodiments for determining a RPT kernel which is the transform matrix of a reduced dimension will be described. In other words, a method for determining or defining the value of r in RPT is described below.

In an embodiment of the present disclosure, the value of r in RPT may be determined by considering the worst case complexity allowed by a transform system. As an embodiment, the worst case complexity may be calculated based on the number of multiplications per sample. MN * r multiplications are required to apply RPT in both forward and backward directions based on a M x N block. Since a 2D block is composed of a total of MN samples, the number of multiplications per sample may be calculated as (MN * r) / MN = r. Accordingly, the value of r may be configured to be kept below the maximum allowable number of multiplications per sample. For example, when the maximum possible number of multiplications per sample for a 16x16 block is configured as 16, the value of r may be determined to be less than or equal to 16. In other words, a forward RPT kernel may be configured as 16 x 256.

In another embodiment, memory usage may be considered as a measure of the worst case complexity. As an example, a memory size allowable per kernel may be configured. For example, when p bytes are required for each kernel coefficient (each element configuring a transform kernel is referred to as a kernel coefficient in the present disclosure) and memory usage is configured to be less than or equal to q bytes per kernel, the value of r may be configured to be less than or equal to q / (MN * p). For example, when p is 1 byte for a forward RPT kernel for a 16x16 block and memory usage is configured to be less than or equal to 8KB per kernel (q = 8KB = $2^{13}$ bytes), the value of r may be configured to be less than or equal to 32.

In addition, as another example, memory usage and/or the number of multiplications per sample may be considered as a measure of the worst case complexity. For example, when the maximum possible number of multiplications per sample for a 16x16 block is configured as 16 and memory usage is configured to be less than or equal to 8KB per kernel (a kernel coefficient is expressed in 1 byte), the value of r may be configured to be less than or equal to 16.

In addition, in an embodiment, the value of r configuring a RPT kernel may be determined by specific information. In other words, the value of r configuring a RPT kernel may be determined based on a predefined encoding parameter. For example, the value of r may be determined according to the size of a block. In other words, a RPT kernel may be variably determined according to the size of a block. Here, a block may be at least one of a coding block, a transform block or a prediction block. In addition, for example, the value of r may be determined based on prediction information. Here, prediction information may include information about inter/intra prediction, intra prediction mode information, etc. In addition, for example, the value of r may be determined based on signaled information (the value of a syntax element). For example, the value of r may be variably determined according to a quantization parameter value. In addition, in terms of complexity improvement, a predefined fixed value may be used as the value of r, and the predefined fixed value may be determined based on signaled information.

When a sample signal is multiplied by RPT kernel r x MN, r transform coefficients may be obtained. The obtained r transform coefficients may be arranged according to the scan order of predefined transform coefficients (e.g., forward/-backward zig-zag scan order, forward/backward horizontal scan order, forward/backward vertical scan order, forward/-backward diagonal scan order, scan order specified based on an intra prediction mode, etc.). When transform coefficients obtained by applying forward RPT are arranged according to this scan order (e.g., scan order in a coefficient group (CG) unit may also be applied), if the value of r is smaller than MN, the inside of a M x N block may not be filled with r transform coefficients, resulting in an empty space. As an embodiment of the present disclosure, the above-described empty space may be predicted in the following manner by considering the characteristic of a residual signal.

- The value of an empty space may be filled by using the value of an available neighboring pixel.
- The value of an empty space may be filled based on the value of an available neighboring pixel and an intra prediction mode. For example, the value of an empty space may be predicted by performing intra prediction based on the value of an available neighboring pixel and an intra prediction mode.
- The value of an empty space may be filled by using a predefined fixed value (e.g., 0).
- The value of an empty space may be filled from an available neighboring pixel by using a predefined intra prediction mode (e.g., a planar mode).

In the present disclosure, filling an empty space with 0 among the above-described examples may be referred to as a zero-out process. When an empty space is filled with 0, the following embodiment may be applied. When a non-zero transform coefficient is detected (or parsed) in a corresponding empty space while parsing a transform coefficient on the side of a decoding device, RPT may be considered (or inferred) not to be applied. In other words, when a non-zero transform coefficient exists in a predefined region representing the corresponding empty space, RPT may be considered not to be applied. In this case, signaling (or parsing) for a flag indicating whether RPT is applied and/or an index designating one of a plurality of RPT kernel candidates may not be performed. As an example, when a non-zero transform coefficient exists in a predefined region representing the corresponding empty space, a predefined variable value may be updated, and it may be inferred that RPT is not applied based on an updated variable value.

In an embodiment of the present disclosure, whether to apply RPT may be determined according to the size and/or shape of a block. In addition, a RPT kernel may be variably determined according to the size and/or shape of a block. Since the value of r may be different according to the size and/or shape of a block (i.e., for each M x N block), an empty space may vary depending on the size and/or shape of a block. Accordingly, a region for checking whether a non-zero transform coefficient is detected for each size and/or shape of a block may be defined differently. In other words, a zero-out region may be determined variably.

As an example, when a 16x64 matrix is applied as a forward RPT matrix for a 8x8 block, the value of r may be 16. In this case, when a CG is a 4x4 sub-block, only a top-left 4x4 block may be filled with a non-zero RPT transform coefficient, and the remaining three 4x4 sub-blocks (i.e., top-right, bottomleft and bottom-right sub-blocks) that are an empty space may be filled with the value of 0. In this case, when a non-zero transform coefficient is detected in the remaining three 4x4 sub-block regions during a decoding process, it may be considered that RPT is not applied. And, as described above, a flag indicating whether RPT is applied or an index designating one of a plurality of RPT kernel candidates may not be signaled.

In addition, as an example, when a 32x128 matrix is applied as a forward RPT matrix for a 16x8 block (i.e., the value of r is 32) and a CG is a 4x4 sub-block, only two CGs in scan order may be filled with a non-zero RPT transform coefficient. For example, a top-left 4x4 sub-block and a 4x4 sub-block adjacent to the bottom of a top-left sub-block may be filled with corresponding RPT transform coefficients. A region filled with 0 as an empty space may be determined as the remaining regions excluding corresponding two 4x4 sub-blocks. A RPT kernel may be determined variably according to the size and/or shape of a block, and as described, an empty space may be determined differently for a 8x8 block and a 16x8 block.

As an embodiment, when the value of r is a multiple of a CG size and a transform coefficient is scanned in a CG unit, a flag and/or an index related to RPT may not be signaled when it is detected that a non-zero transform coefficient exists in CGs belonging to an empty space. In other words, transform coefficients inside a CG may be scanned in designated order for each CG, and transform coefficients inside a CG may be scanned in the same manner for a next CG according to scan order for a CG unit. In a conventional image compression technology, a flag for whether a non-zero transform coefficient exists in a corresponding CG is signaled first for each CG, so whether RPT is applied may be determined only with corresponding information, which may reduce signaling overhead and related implementation complexity.

As described above, when a non-zero transform coefficient is detected in an empty space filled with 0 when RPT is applied, RPT may not be applied. In this case, signaling for RPT-related information may be omitted. However, since it is not possible to determine whether RPT is applied when a non-zero transform coefficient is not detected in a corresponding empty space, a flag indicating whether RPT is applied may be parsed after parsing (or signaling) a relevant transform coefficient to finally determine whether RPT is applied.

As an embodiment, forward secondary transform may be additionally applied to transform coefficients generated by applying RPT. Alternatively, forward secondary transform may be additionally applied to a region where corresponding generated transform coefficients are positioned in a M x N block. In the present disclosure, a corresponding region or a part of a corresponding region may be referred to as a ROI from the perspective of forward secondary transform. For a backward direction, backward secondary transform may be applied first, and then backward RPT may be applied. Specifically, a region where r transform coefficients generated by applying forward RPT are placed or a part of a corresponding region may be configured as a ROI to apply forward secondary transform. In this case, when a 16x64 forward RPT transform matrix is applied to a 8x8 region, generated 16 transform coefficients may be positioned in a top-left 4x4 sub-block, and a corresponding sub-block region may be configured as a ROI to apply forward secondary transform to a corresponding ROI.

In addition, a RPT kernel may adjust a coefficient value by considering an operation such as an integer operation or a fixed-point operation. In other words, a RPT kernel may be configured to perform transform through an integer operation (or a fixed-point operation) in a practical codec system by appropriately scaling kernel coefficients belonging to a corresponding kernel, instead of theoretical orthogonal transform or non-orthogonal transform (here, orthogonal transform and non-orthogonal transform represent transform in which the norm of each transform basis vector is 1). It may also be reflected equally when RPT is applied, such as a scaling factor multiplied when applying separable transform in the existing image compression technology. In this case, separable transform or non-separable transform (including RPT) may be performed while maintaining another process (e.g., a quantization or dequantization process) other than transform.

The integerized coefficient of a RPT kernel may be obtained by multiplying a transform basis vector by a scaling value described above. As an embodiment, multiplying a scaling value may include applying an operation such as rounding, floor, ceiling, etc. to each kernel coefficient. In other words, an integerized RPT kernel obtained through the above-described method may be defined and used for a transform/inverse transform process. As described above, when kernel coefficients of a scaled integer value are obtained through an operation such as rounding, floor, ceiling, etc., the maximum value and the minimum value may be obtained for all kernel coefficients, so the number of bits may be obtained enough to express all kernel coefficients from corresponding maximum and minimum values. For example, when the corresponding maximum value is less than or equal to 127 and the corresponding minimum value is greater than or equal to - 128, all integer kernel coefficients may be expressed with 8 bits (especially, through the expression of two's complement, etc.).

Generally, when the corresponding maximum value is less than or equal to $(2^{(N-1)} - 1)$ and the corresponding minimum value is greater than or equal to $-2^{(N-1)}$, all integer kernel coefficients may be expressed with N bits. If the maximum value is greater than $(2^{(N-1)} - 1)$ or the minimum value is less than $-2^{(N-1)}$, all integer kernel coefficients may not be expressed with N bits. In this case, 1) all kernel coefficients may be additionally multiplied by a scaling value to adjust them to fall within the range of N bits, or 2) the number of bits required to express a kernel coefficient may be increased (i.e., N+1 bits or more). If all kernel coefficients need to be multiplied by $2^{-p}$ to express them with N bits (p >= 1), they may be multiplied by $2^p$ for compensation so that they are fused into the existing encoding/decoding process. As an embodiment, multiplying by $2^p$ may be implemented by additionally performing a shift operation to the left by p bits or by reducing the amount of right shifts applied during a quantization or dequantization process by p.

All kernel coefficients may be expressed as a 8-bit, a 9-bit, a 10-bit, etc. by using a method described above, and of course, the scaling value of a kernel coefficient may be configured differently for each block size or kernel and the number of bits for expressing a kernel coefficient may be configured differently.

Embodiment 4

In an embodiment of the present disclosure, a method for signaling non-separable primary transform according to the present disclosure is described. Non-separable primary transform according to the present disclosure may include NSPT described above in Embodiments 1 to 3 and RPT described above in Embodiment 3. In other words, although it is mainly described that this embodiment is applied to NSPT, NSPT may include RPT described in Embodiment 3. Several embodiments for signaling other transforms including a combination (or a harmony) between NSPT and another transform and other transforms including NSPT are described.

As an embodiment, it is possible to determine whether to apply NSPT or another transform (e.g., DST-7) according to an intra prediction mode. When a flag value representing whether to apply NSPT is 1, it may be determined to apply NSPT. An intra prediction mode value may be checked to apply NSPT or another designated transform according to a corresponding intra prediction mode value. In other words, even when it is determined to apply NSPT according to a NSPT flag, NSPT may be selectively applied according to an intra prediction mode. As an example, when a NSPT flag value is 1 and an intra prediction mode is a planar mode or a DC mode, predetermined trigonometric transform (e.g., DST-7) may be applied instead of NSPT. In the present disclosure, trigonometric transform may represent a trigonometric function-based transform kernel. As an example, trigonometric transform may include DCT-2, DST-7, DCT-8, DCT-5, DST-4, and DST-1. Alternatively, each transform may be defined as a combination of DCT-2, DST-7, DCT-8, DCT-5, DST-4, and DST-1. When a NSPT flag value is 1 and an intra prediction mode is a directional mode, NSPT may be applied. In addition, even when a NSPT flag is not signaled and NSPT is implicitly determined to be applied, NSPT may be selectively applied in the same manner. For example, whether to apply NSPT may be implicitly determined based on a block size, the ratio of width/height of a block, the number of pixels in a block, an intra prediction mode value, coding information such as an intra prediction mode for a neighboring block, the statistical characteristic of neighboring pixels (all/some pixels included in a block adjacent to the top/left of a current block), a QP, etc.

In addition, as an embodiment, NSPT and DST-7 pairs may be defined as two candidates and selected based on an index. Here, a DST-7 pair refers to a case where DST-7 is applied in both horizontal and vertical directions. In this case, when an intra subpartitions (ISP) mode is applied and it is defined that NSPT is applied without selecting one of the two candidates, NSPT may be applied without signaling a separate index (or flag) indicating whether to apply NSPT or a DST-7 pair.

In addition, as an embodiment, when there are at least two NSPT candidates, NSPT candidates may be placed first in a candidate group (or a list, a table) and a DST-7 pair may be placed later. Alternatively, a DST-7 pair may be placed first and NSPT candidates may be placed later. When it is an ISP mode and it is known that NSPT is applied (e.g., when a flag value indicating whether NSPT is applied is 1), a DST-7 pair may be excluded from a candidate group and an index for selecting one of a plurality of NSPT candidates may be signaled to designate a specific NSPT kernel when there are a plurality of NSPT candidates. In the above-described embodiment, a case where a DST-7 pair is used is mainly described, but the present disclosure is not limited thereto. In other words, it goes without saying that non-separable primary transform and a horizontal/vertical transform pair other than a DST-7 pair may be configured as a candidate.

When selecting one NSPT candidate and one of the DST-7 pair candidates, only one bin may be used to designate one of the two candidates. If there are at least two NSPT candidates, various index signaling methods may be possible. For example, truncated unary, truncated binary, fixed length, etc. may be used as a binarization method for a corresponding index. As an example in which truncated unary binarization is applied, a bin indicating whether it is a DST-7 pair or NSPT candidates may be signaled first. Afterwards, it may be configured to signal an index for specifying NSPT candidates subsequently when a corresponding bin value is 1. As an index for distinguishing these NSPT candidates, if there are two NSPT candidates, they may be distinguished as one bin, and if there are at least three NSPT candidates, bins configured through binarization such as truncated unary, truncated binary, fixed length, etc. may be signaled.

In addition, according to an embodiment of the present disclosure, NSPT and MTS described above in Embodiment 2 (hereinafter, simply referred to as MTS) may be selectively applied. Specifically, a flag indicating whether to apply NSPT or MTS may be defined. When a corresponding flag value is 1, NSPT may be applied, and when it is 0, MTS may be applied. Alternatively, conversely, when a corresponding flag value is 0, NSPT may be applied, and when it is 1, MTS may be applied. In substantially the same manner as in the above-described embodiment, when a corresponding flag value is 1, an index for distinguishing NSPT candidates may be additionally signaled. When NSPT candidates and other transform candidates may be selected entirely, a method that is substantially the same as in the above-described embodiment may be applied. For example, it may be configured to select a DST-7 pair along with NSPT and MTS. In other words, it may be configured to select a DST-7 pair instead of NSPT according to an intra prediction mode as in an embodiment above. When a corresponding flag value is 0, index signaling for MTS may be performed.

In addition, since a general image compression system supports a DCT-2 pair with default transform, a flag indicating whether to apply MTS or NSPT may be signaled first, and then a signaling process described above may be performed when a corresponding flag value is 1. In the present disclosure, a trigonometric transform pair represents a case where horizontal transform (or a transform kernel) and vertical transform (or a transform kernel) are configured with corresponding trigonometric transform. In other words, a DCT-2 pair represents a case where both horizontal transform and vertical transform are DCT-2. In other words, it may be configured to apply a DCT-2 pair when a corresponding flag value is 0. Alternatively, conversely, it may be configured to apply a DCT-2 pair when a corresponding flag value is 1. Alternatively, a flag indicating whether to apply NSPT or whether to select transform among MTS and a DCT-2 pair may be signaled first, and then NSPT may be applied when a corresponding flag value is 1. In other words, when a corresponding flag value is 1, a NSPT index signaling process in an embodiment described above may be performed. When a corresponding flag value is 0, signaling for MTS may be performed.

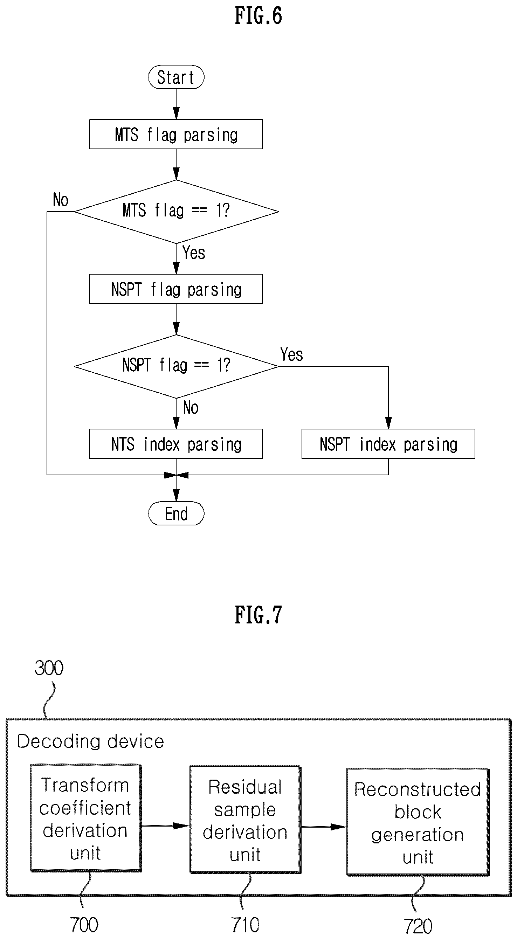

FIG. 6 is a flowchart illustrating a transform information signaling process according to an embodiment of the present disclosure.

In FIG. 6, parsing a flag or a syntax is mainly described from the perspective of a decoding device, but it may also be applied substantially equally to an encoding method, and from the perspective of an encoding device, it may be expressed as encoding or signaling instead of parsing.

Referring to FIG. 6, a MTS flag may be parsed. A MTS flag may be a flag representing whether to apply NSPT or MTS. When a MTS flag value is 1, NSPT or MTS may be applied, and when a MTS flag value is 0, default transform (e.g., a DCT-2 pair) may be applied. When a MTS flag value is 1, a NSPT flag may be parsed. A NSPT flag may be a flag designating NSPT or MTS. As an example, when a NSPT flag value is 1, NSPT may be applied, and when it is 0, MTS may be applied.

When a NSPT flag value is 1, NSPT may be applied. In this case, a NSPT index may be parsed to designate which NSPT kernel will be applied by using a corresponding index value. When there is one NSPT kernel candidate, there is no need to parse a corresponding NSPT index. When a NSPT flag value is 0, MTS may be applied. In this case, a MTS index may be parsed. An index signaling method described above in Embodiment 2 may be applied and here, a redundant description is omitted.

As another embodiment, whether to apply NSPT may be determined based on whether a predefined condition is satisfied. When a requirement for applying NSPT is satisfied, a DCT-2 pair may be configured not to be applied. For example, when a block size is a block size for applying NSPT, NSPT may be applied without applying a DCT-2 pair.

In the above-described embodiment, it was described that when a flag value for applying NSPT or MTS is 0, a DCT-2 pair which is default transform is applied, but differently, when a corresponding flag value is 0, NSPT may be applied, and when a corresponding flag value is 1, MTS may be applied. Of course, conversely, when a corresponding flag value is 1, NSPT may be applied and when it is 0, MTS may be applied. When a corresponding flag value is 0, i.e., when NSPT is applied, a corresponding NSPT kernel may be applied without additional signaling when there is only NSPT candidate. When there are a plurality of NSPT candidates, an additional index for selecting one NSPT candidate may be signaled or one NSPT candidate may be implicitly derived. When a corresponding flag value is 1, i.e., when MTS is applied, index signaling for MTS may be performed as described in Embodiment 2 above. In addition, when a corresponding flag value is 0, another transform other than NSPT may be applied. For example, it may be configured to select one of NSPT candidates and a DST-7 pair. As an example, when only one NSPT candidate and one DST-7 pair may be selected, it may be configured to add one bin and select one of the two.

As another embodiment, it may be configured to maintain the sum of the number of NSPT candidates and the number of MTS candidates at a constant value. For example, when a first candidate has NSPT and places a MTS candidate later, it may be configured to be the same as the number of candidates in MTS under the same situation by placing it to be less than the existing number of MTS candidates by 1. As another example, when there are at least two NSPT candidates, NSPT candidates may be placed first and a MTS candidate may be placed later, but it may be configured to be the same as the number of MTS candidates under the same situation by placing it to be less than the existing number of MTSs by the number of NSPT candidates.

Meanwhile, it may be configured to apply only NSPT and not MTS in an ISP mode. In other words, when it is a specific intra prediction mode, it may be configured to apply only NSPT and not MTS, or conversely, to apply only MTS and not NSPT. After the sum of the number of NSPT candidates and MTS candidates is maintained at a constant value and index signaling in MTS is applied as it is or a flag for distinguishing whether to apply NSPT or MTS is signaled first, it may be configured to signal an index for distinguishing corresponding candidates separately for a case of applying NSPT and a case of applying MTS. The number of available NSPT candidates and the number of MTS candidates may be defined and signaled at a high level (e.g., a slice header, a picture header, a sequence header).

The transform kernel of a current block may be determined based on any one of the above-described embodiments 1 to 4. Alternatively, the transform kernel of a current block may be determined based on a combination of at least two of the embodiments 1 to 4, within a range where an invention according to the above-described embodiments 1 to 4 does not conflict with each other.

Referring to FIG. 4, a current block may be reconstructed based on the residual sample of a current block S420.

The prediction sample of a current block may be derived based on the intra prediction mode of a current block. The reconstructed sample of a current block may be generated based on the prediction sample and the residual sample of a current block.

FIG. 7 shows a schematic configuration of a decoding device 300 that performs an image decoding method according to the present disclosure.

Referring to FIG. 7, a decoding device 300 according to the present disclosure may include a transform coefficient derivation unit 700, a residual sample derivation unit 710 and a reconstructed block generator 720. A transform coefficient derivation unit 700 may be configured in an entropy decoder 310 of FIG. 3, a residual sample derivation unit 710 may be configured in the residual processor 320 of FIG. 3 and a reconstructed block generator 720 may be configured in the adder 340 of FIG. 3.

A transform coefficient derivation unit 700 may obtain residual information of a current block from a bitstream and decode it to derive the transform coefficient of a current block.

A residual sample derivation unit 710 may perform at least one of dequantization or inverse transform on the transform coefficient of a current block to derive the residual sample of a current block.

A residual sample derivation unit 710 may determine a transform kernel for inverse transform of a current block through a predetermined transform kernel determination method and derive the residual sample of a current block based on this. The transform kernel determination method is the same as described by referring to FIGS. 4 to 6, and a detailed description is omitted here.

A reconstructed block generator 720 may reconstruct a current block based on the residual sample of a current block.

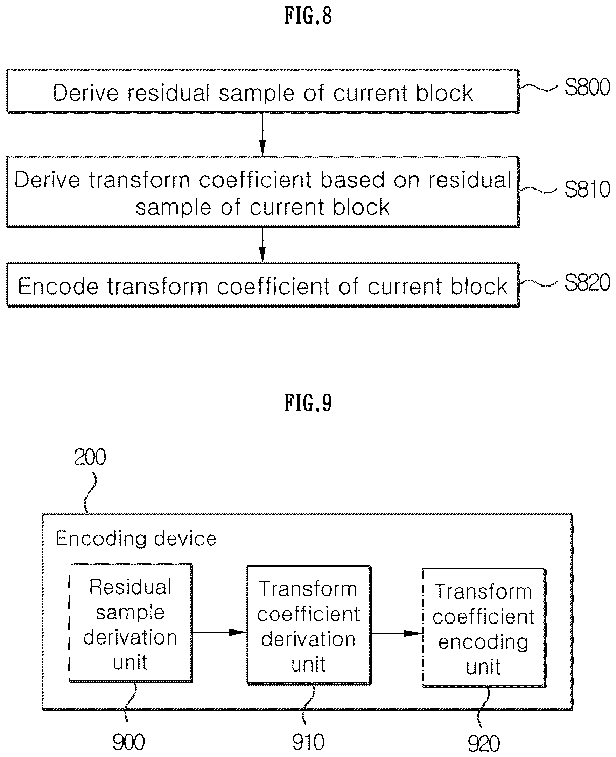

FIG. 8 shows an image encoding method performed by an encoding device 200, as an embodiment according to the present disclosure.

Referring to FIG. 8, the residual sample of a current block may be derived S800.

The residual sample of a current block may be derived by subtracting a prediction sample from the original sample of a current block. Here, a prediction sample may be derived based on a predetermined intra prediction mode.

Referring to FIG. 8, the transform coefficient of a current block may be derived by performing at least one of transform or quantization on the residual sample of a current block S810.

A method for determining a transform kernel for the transform is the same as described by referring to FIGS. 4 to 6, and a detailed description is omitted here. In other words, a transform kernel for the transform may be determined based on at least one of the above-described embodiments 1 to 4.

For example, as in Embodiment 1, one or more transform sets for transform of a current block may be defined/configured, and each transform set may include one or more transform kernel candidates. In this case, any one of a plurality of transform sets may be selected as the transform set of a current block. Any one of a plurality of transform kernel candidates belonging to the transform set of a current block may be selected. The selection may be performed implicitly based on the context of a current block. Alternatively, an optimal transform set and/or transform kernel candidate for a current block may be selected, and an index indicating this may be signaled.

Alternatively, as in Embodiment 2, the transform kernel of a current block may be determined based on a MTS set. Any one of a plurality of MTS sets may be selected based on at least one of the size of a current block or an intra prediction mode. A selected MTS set may include one or more transform kernel candidates. Any one of the one or more transform kernel candidates may be selected, and the transform kernel of a current block may be determined based on a selected transform kernel candidate. The transform kernel candidate may be selected by using a transform kernel candidate index derived based on the context of a current block. Alternatively, an optimal transform kernel candidate for a current block may be selected, and a transform kernel candidate index indicating a selected transform kernel candidate may be signaled.

Alternatively, the transform kernel of a current block may be determined based on a combination of at least two of embodiments 1 to 4.

Referring to FIG. 8, a bitstream may be generated by encoding the transform coefficient of a current block S820.

Based on the transform coefficient of a current block, residual information regarding the transform coefficient may be generated, and a bitstream may be generated by encoding residual information.

FIG. 9 shows a schematic configuration of an encoding device 200 that performs an image encoding method according to the present disclosure.

Referring to FIG. 9, an encoding device 200 according to the present disclosure may include a residual sample derivation unit 900, a transform coefficient derivation unit 910 and a transform coefficient encoder 920. A residual sample derivation unit 900 and a transform coefficient derivation unit 910 may be configured in the residual processor 230 of FIG. 2, and a transform coefficient encoder 920 may be configured in the entropy encoder 240 of FIG. 2.

A residual sample derivation unit 900 may derive the residual sample of a current block by subtracting a prediction sample from the original sample of a current block. Here, a prediction sample may be derived based on a predetermined intra prediction mode.

A transform coefficient derivation unit 910 may derive the transform coefficient of a current block by performing at least one of transform or quantization on the residual sample of a current block. A transform coefficient derivation unit 910 may determine the transform kernel of a current block based on at least one of the above-described embodiments 1 to 4 and may derive a transform coefficient by applying the transform kernel to the residual sample of a current block.

A transform coefficient encoder 920 may encode the transform coefficient of a current block to generate a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding device and/or a decoding device according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding device and an encoding device to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

FIG. 9 shows an example of a contents streaming system to which embodiments of the present disclosure may be applied.

Referring to FIG. 9, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, the method comprising:

   deriving transform coefficients of a current block from a bitstream;
   performing at least one of a dequantization or an inverse transform on the transform coefficients of the current block to derive residual samples of the current block; wherein a transform kernel for the inverse transform is determined based on a plurality of predefined transform kernels, and the plurality of predefined transform kernels include at least one of a non-separable primary inverse transform kernel or a trigonometric function-based primary transform kernel, and
   reconstructing the current block based on the residual samples of the current block.

2. The method of claim 1, wherein the transform kernel for the inverse transform is determined as one of the non-separable primary inverse transform kernel and DST-7.

3. The method of claim 1, wherein the non-separable primary inverse transform kernel is a kernel in which N transform coefficients are input and M transform coefficients are output, and
   wherein N is smaller than M.

4. The method of claim 3, wherein the N is variably determined based on a predefined encoding parameter.

5. The method of claim 3, wherein the encoding parameter includes at least one of a block size, inter prediction information, intra prediction information or a quantization parameter.

6. The method of claim 1, wherein the trigonometric function-based primary transform kernel includes at least one of DCT-2, DST-7, DCT-8, DCT-5, DST-4 or DST-1.

7. The method of claim 1, wherein deriving the residual samples includes:

   determining a transform set for a non-separable primary inverse transform based on an intra prediction mode of the current block; and
   deriving the non-separable primary inverse transform kernel from the transform set.

8. The method of claim 7, wherein the transform set is determined based on the intra prediction mode of the current block and a pre-defined mapping table.

9. An image encoding method, the method comprising:

   deriving residual samples of a current block;
   performing at least one of a transform or a quantization on the residual samples of the current block to derive transform coefficients of the current block; wherein a transform kernel for the transform is determined based on a plurality of predefined transform kernels, and the plurality of predefined transform kernels include at least one of a non-separable primary transform kernel or a trigonometric function-based primary transform kernel, and
   encoding the transform coefficients of the current block.

10. A computer readable storage medium storing a bitstream generated by an image encoding method according to claim 9.

11. A method for transmitting data, the method comprising:

obtaining a bitstream for image information; wherein the bitstream is generated by deriving residual samples of a current block, performing at least one of a transform or a quantization on the residual samples of the current block to derive transform coefficients of the current block, and encoding the transform coefficients of the current block, and

transmitting data including the bitstream,

wherein a transform kernel for the transform is determined based on a plurality of predefined transform kernels, and the plurality of predefined transform kernels include at least one of a non-separable primary transform kernel or a trigonometric function-based primary transform kernel.

FIG.1

**FIG.2**

# FIG.3

# FIG.4

| | |
|---|---|
| Derive transform coefficient of current block | ⌒ S400 |

↓

| | |
|---|---|
| Derive residual sample based on transform coefficient of current block | ⌒ S410 |

↓

| | |
|---|---|
| Reconstruct current block based on residual sample of current block | ⌒ S420 |

# FIG.5

0: Planar
1: DC

## FIG.6

```
                    ( Start )
                        │
                        ▼
            ┌───────────────────────┐
            │   MTS flag parsing    │
            └───────────────────────┘
                        │
                        ▼
                   ╱─────────╲
       No        ╱             ╲
    ◄───────────  MTS flag == 1?
                  ╲             ╱
                   ╲─────────╱
                        │ Yes
                        ▼
            ┌───────────────────────┐
            │   NSPT flag parsing   │
            └───────────────────────┘
                        │
                        ▼
                   ╱─────────╲
                  ╱             ╲        Yes
                   NSPT flag == 1? ──────────────┐
                  ╲             ╱                 │
                   ╲─────────╱                    │
                        │ No                       │
                        ▼                          ▼
            ┌──────────────────┐      ┌──────────────────────┐
            │ NTS index parsing│      │  NSPT index parsing  │
            └──────────────────┘      └──────────────────────┘
                        │                          │
                        ▼◄─────────────────────────┘
                    ( End )
```

## FIG.7

300

```
┌────────────────────────────────────────────────────────────────┐
│  Decoding device                                                 │
│                                                                  │
│  ┌──────────────┐     ┌──────────────┐     ┌──────────────────┐  │
│  │  Transform   │     │   Residual   │     │  Reconstructed   │  │
│  │ coefficient  │ ──► │    sample    │ ──► │      block       │  │
│  │  derivation  │     │  derivation  │     │    generation    │  │
│  │     unit     │     │     unit     │     │       unit       │  │
│  └──────────────┘     └──────────────┘     └──────────────────┘  │
│                                                                  │
└────────────────────────────────────────────────────────────────┘
         700                   710                    720
```

## FIG.8

Derive residual sample of current block — S800

Derive transform coefficient based on residual sample of current block — S810

Encode transform coefficient of current block — S820

## FIG.9

200

Encoding device

| Residual sample derivation unit | → | Transform coefficient derivation unit | → | Transform coefficient encoding unit |

900        910        920

# FIG.10

Smartphone

Camcorder/camera

Encoding server

Streaming server

Web server

Wired and wireless communication

Wired and wireless communication

Media storage

User equipment

Game console

PC

Set top box

Smartphone

## INTERNATIONAL SEARCH REPORT

| International application No. |
|---|
| **PCT/KR2023/015941** |

### A. CLASSIFICATION OF SUBJECT MATTER

**H04N 19/625**(2014.01)i; **H04N 19/61**(2014.01)i; **H04N 19/18**(2014.01)i; **H04N 19/132**(2014.01)i; **H04N 19/124**(2014.01)i; **H04N 19/157**(2014.01)i

According to International Patent Classification (IPC) or to both national classification and IPC

### B. FIELDS SEARCHED

Minimum documentation searched (classification system followed by classification symbols)

H04N 19/625(2014.01); H04N 19/103(2014.01); H04N 19/119(2014.01); H04N 19/12(2014.01); H04N 19/136(2014.01); H04N 19/46(2014.01); H04N 19/60(2014.01); H04N 19/61(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 1차(primary), 변환(transform), 잔차(residual), 커널(kernel), 비분리(non-separable)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0047628 A (LG ELECTRONICS INC.) 18 April 2022 (2022-04-18)<br>See paragraphs [0016], [0045], [0067]-[0068], [0073], [0089]-[0096], [0116]-[0117] and [0416]-[0417]; and claim 1. | 1-11 |
| Y | CHOI, Jung-Ah et al. AHG12: A study on non-separable primary transform. JVET-AA0064-v2, Joint Video Experts Team (JVET) of ITU-T SG 16 WP 3 and ISO/IEC JTC 1/SC 29, 27th Meeting, by teleconference. pp 1-3, 13 July 2022.<br>See pages 1-2. | 1-11 |
| A | KR 10-2452745 B1 (QUALCOMM INCORPORATED) 07 October 2022 (2022-10-07)<br>See paragraphs [0024], [0161], [0174] and [0291]-[0293]. | 1-11 |
| A | US 2022-0312040 A1 (INTERDIGITAL VC HOLDINGS, INC.) 29 September 2022 (2022-09-29)<br>See claims 4-11. | 1-11 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 604 546 A1

## INTERNATIONAL SEARCH REPORT

International application No.

**PCT/KR2023/015941**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0057189 A (WILUS INSTITUTE OF STANDARDS AND TECHNOLOGY INC. et al.) 20 May 2021 (2021-05-20)<br>See paragraph [0171]; and claim 2. | 1-11 |

Form PCT/ISA/210 (second sheet) (July 2022)

**INTERNATIONAL SEARCH REPORT**
Information on patent family members

International application No.

**PCT/KR2023/015941**

| Patent document cited in search report | | | Publication date (day/month/year) | Patent family member(s) | | | Publication date (day/month/year) |
|---|---|---|---|---|---|---|---|
| KR | 10-2022-0047628 | A | 18 April 2022 | CN | 114586353 | A | 03 June 2022 |
| | | | | EP | 4017008 | A1 | 22 June 2022 |
| | | | | US | 2022-0417518 | A1 | 29 December 2022 |
| | | | | WO | 2021-054798 | A1 | 25 March 2021 |
| KR | 10-2452745 | B1 | 07 October 2022 | CN | 107211144 | A | 26 September 2017 |
| | | | | CN | 107211144 | B | 03 January 2020 |
| | | | | EP | 3251364 | A1 | 06 December 2017 |
| | | | | JP | 2018-506905 | A | 08 March 2018 |
| | | | | JP | 6768675 | B2 | 14 October 2020 |
| | | | | KR | 10-2017-0107452 | A | 25 September 2017 |
| | | | | US | 10306229 | B2 | 28 May 2019 |
| | | | | US | 2016-0219290 | A1 | 28 July 2016 |
| | | | | WO | 2016-123091 | A1 | 04 August 2016 |
| US | 2022-0312040 | A1 | 29 September 2022 | CN | 113950834 | A | 18 January 2022 |
| | | | | EP | 3977732 | A1 | 06 April 2022 |
| | | | | JP | 2022-534999 | A | 04 August 2022 |
| | | | | KR | 10-2022-0047725 | A | 19 April 2022 |
| | | | | WO | 2020-243258 | A1 | 03 December 2020 |
| KR | 10-2021-0057189 | A | 20 May 2021 | CN | 113196780 | A | 30 July 2021 |
| | | | | KR | 10-2023-0174294 | A | 27 December 2023 |
| | | | | US | 11539973 | B2 | 27 December 2022 |
| | | | | US | 2023-0100855 | A1 | 30 March 2023 |
| | | | | WO | 2020-145805 | A1 | 16 July 2020 |

Form PCT/ISA/210 (patent family annex) (July 2022)